# EUROPÄISCHE PATENTANMELDUNG

(11) **EP 4 793 669 A1**
(43) Veröffentlichungstag der Anmeldung: **19.08.2026**
(21) Anmeldenummer: 26157591.4
(22) Anmeldetag: 10.02.2026
(51) Int. Cl.: G01S 19/14, G01S 19/48, E01C 23/088, E01C 19/00

(54) **VERFAHREN ZUM ERMITTELN EINER ANGENOMMENEN ZURÜCKGELEGTEN BEWEGUNGSBAHN EINER BODENFRÄSMASCHINE SOWIE BODENFRÄSMASCHINE**

(30) Priorität: 17.02.2025 DE 102025105860
(71) Anmelder: BOMAG GmbH, 56154 Boppard (DE)
(72) Erfinder: LAUGWITZ, Niels, 56154 Boppard (DE)
(74) Vertreter: Zimmermann & Partner Patentanwälte mbB

(57) **Zusammenfassung**

Die Erfindung betrifft ein Verfahren zum Ermitteln einer angenommenen zurückgelegten Bewegungsbahn einer Bodenfräsmaschine, das ein Ermitteln einer angenommenen zurückgelegten Bewegungsbahn unter Berücksichtigung von GNSS-Positionsdatensätzen und Lokal-Positionsdatensätzen durch eine Auswerteeinrichtung umfasst. Die Erfindung betrifft ferner eine Bodenfräsmaschine mit einer GNSS-Signalempfangseinrichtung und einer lokalen Bewegungserfassungssensoreinrichtung sowie mit einer Auswerteeinrichtung zur Durchführung des Verfahrens.

## Beschreibung

Die Erfindung betrifft ein Verfahren zum Ermitteln einer angenommenen zurückgelegten Bewegungsbahn einer Bodenfräsmaschine sowie eine Bodenfräsmaschine.

Bodenfräsmaschinen, insbesondere vom Typ Straßenkaltfräse, werden üblicherweise dazu eingesetzt, eine bestehende Straßenoberfläche in einer gewünschten Frästiefe mithilfe einer Fräseinrichtung, typischerweise umfassend eine trommelförmige und auf ihrer Außenmantelfläche mit Fräsmeißeln besetzte Fräswalze, die im Fräsbetrieb um eine horizontal und quer zur Arbeitsrichtung verlaufende Rotationsachse in den Bodenuntergrund eingreift, abzufräsen. Im Rahmen dieser Fräsarbeiten kann es von Interesse sein, die von der Bodenfräsmaschine im Fräsbetrieb zurückgelegte, insbesondere gefräste, Bewegungsbahn zu bestimmen, um diese Informationen beispielsweise zu Abrechnungs- und/oder Dokumentationszwecken heranziehen zu können und/oder für im Arbeitsprozess der Bodenfräsmaschine nachgelagert auf der jeweiligen Straßenbaustelle eingesetzte Baumaschinen, wie beispielsweise einem Straßenfertiger zum Auslegen einer Asphaltmatte, zur Verfügung stellen zu können.

Aus der DE 10 2022 133 913 A1 ist es bekannt, zusätzlich zu GNSS-Positionsdaten mithilfe einer GNSS-Bewertungsgrößen-Erfassungseinrichtung den GNSS-Positionsdaten ein Qualitätsmerkmal hinzuzufügen. Ferner ist die Nutzung einer Mobilfunk-Bewertungseinrichtung vorgesehen. Auf der Grundlage dieser Daten soll dann ein raumbezogener Mobilfunk-Telemetrie-Datensatz an einen Cloud-Speicher übermittelt werden. Treten Störungen der Funkverbindung zu den GNSS-Satelliten auf, beispielsweise aufgrund lokaler Verschattungen, besteht eine erhöhte Wahrscheinlichkeit, dass auch die erforderliche Datenübertragungsverbindung an den Cloud-Speicher nicht mehr verfügbar ist. Für diese Betriebsphasen können an der Maschine selbst keine Ersatzwerte mehr ermittelt werden, so dass hierdurch Ungenauigkeiten im Endergebnis entstehen können.

Hiervon ausgehend besteht die Aufgabe der Erfindung darin, eine alternative Möglichkeit anzugeben, die Bewegungsbahn einer Bodenfräsmaschine, insbesondere im laufenden Fräsbetrieb, unter Einbindung einer GNSS-Signal-Empfangseinrichtung dokumentieren zu können.

Die Lösung der Aufgabe gelingt mit einem Verfahren zum Ermitteln einer angenommenen zurückgelegten Bewegungsbahn einer Bodenfräsmaschine sowie mit einer Bodenfräsmaschine gemäß den unabhängigen Ansprüchen. Bevorzugte Weiterbildungen sind in den abhängigen Ansprüchen angegeben.

Das vorliegende Verfahren betrifft eine Bodenfräsmaschine, insbesondere eine selbstfahrende Bodenfräsmaschine. Derartige Bodenfräsmaschinen können einen über Fahreinrichtungen getragenen Maschinenrahmen, eine an dem Maschinenrahmen gelagerte Fräseinrichtung und eine Antriebseinrichtung, wie beispielsweise einen Verbrennungs- und/oder Elektromotor, umfassen. Die Antriebseinrichtung kann zur Bereitstellung der für den Fahr- und Arbeitsbetrieb bzw. Fräsbetrieb der Bodenfräsmaschine erforderlichen Antriebsenergie ausgebildet sein. Entsprechend kann es sich bei der Bodenfräsmaschine um eine selbstfahrende Bodenfräsmaschine handeln. Die Fahreinrichtungen können über eine oder mehrere Hubeinrichtungen mit dem Maschinenrahmen verbunden sein, so dass der Maschinenrahmen und mit ihm die üblicherweise an ihm gelagerte Fräseinrichtung, beispielsweise zur Einstellung einer Frästiefe, in Vertikalrichtung verstellt werden können. Es kann ferner ein Fahrstand von der Bodenfräsmaschine umfasst sein, aus dem heraus die Bodenfräsmaschine von einem Bediener bedient, werden kann. Ergänzend oder alternativ kann die Bodenfräsmaschine ein oder mehrere Transporteinrichtungen, insbesondere in Form von Förderbändern, für einen Transport des im Rahmen eines Fräsbetriebs entstehenden Fräsgutes hin zu einem Abwurfpunkt umfassen. Eine solche Bodenfräsmaschine ist beispielsweise in der DE 10 2023 203 188 Al offenbart.

Das erfindungsgemäße Verfahren zum Ermitteln einer angenommenen zurückgelegten Bewegungsbahn einer Bodenfräsmaschine ist insbesondere auch darauf gerichtet, zumindest im Nachgang eines Fräsbetriebes die von der Bodenfräsmaschine während des Fräsbetriebs zurückgelegte Wegstrecke auf der Grundlage mehrerer Sensoreinrichtungen mit einem vergleichsweise geringem apparativen Aufwand möglichst genau zu bestimmen.

In einem Schritt a) des erfindungsgemäßen Verfahrens kann es vorgesehen sein, dass ein Durchführen einer Fräsaufgabe entlang einer tatsächlichen Bewegungsbahn erfolgt. Eine Fräsaufgabe bezeichnet vorliegend somit beispielsweise einen Arbeitseinsatz der Bodenfräsmaschine, bei dem sich die Bodenfräsmaschine entlang einer Bewegungsbahn bewegt und dabei eine Bodenoberfläche, insbesondere Straßenoberfläche, in einer Frästiefe und mit einer Fräsbreite auffräst. Das dabei entstehende Fräsgut kann gegebenenfalls auch abtransportiert werden. Die Frästiefe und/oder die Fräsbreite können über die Bewegungsbahn bzw. Wegstrecke hinweg konstant sein oder auch variieren. Die dabei mithilfe eines oder mehrerer Sensoren bestimmte Wegstrecke ist jedoch aufgrund bestehender Messtoleranzen und -ungenauigkeiten üblicherweise nicht identisch zur tatsächlichen Bewegungsbahn, sondern stellt vielmehr eine angenommene Bewegungsbahn der Bodenfräsmaschine dar, die in der Praxis möglichst nah der tatsächlichen Bewegungsbahn angenähert wird.

Insbesondere gleichzeitig zum Schritt a) kann dazu ein Erfassen von GNSS-Positionsdaten mithilfe einer GNSS-Signal-Empfangseinrichtung und ein Erstellen von GNSS-Positionsdatensätzen mit den erfassten GNSS-Positionsdaten und wenigstens einer die Genauigkeit der in dem jeweiligen GNSS-Positionsdatensatz enthaltenen GNSS-Positionsdaten charakterisierenden GNSS-Signal-Qualitätsinformation erfolgen. GNSS (*global navigation satellite system*) bezeichnet ein System zur Positionsbestimmung durch den Empfang von Signalen von Navigationssatelliten. GNSS-Positionsdaten bezeichnen Positionsdaten, die unter Nutzung einer von der Bodenfräsmaschine mitgeführten GNSS-Signal-Empfangseinrichtung gewonnen wurden und entsprechend Koordinaten, d.h. geografische Koordinaten insbesondere für Breiten- und Längengrad, für eine oder mehrere Positionen umfassen. Definitionsgemäß umfasst vorliegend ein einzelner GNSS-Positionsdatensatz insbesondere genau eine Position.

Eine die Genauigkeit der in dem jeweiligen GNSS-Positionsdatensatz enthaltenen GNSS-Positionsdaten charakterisierende GNSS-Signal-Qualitätsinformation bezeichnet eine über die unmittelbaren GNSS-Koordinaten hinausgehende Information, insbesondere zur Genauigkeit der jeweiligen GNSS-Positionsdaten. Als GNSS-Signal-Qualitätsinformation bzw. als Maß für die Genauigkeit einer durch GNSS-Positionsdaten definierten Position kann beispielsweise auf den "Circular Error of Probability" (abgekürzt "CEP") zurückgegriffen werden, der die kreisförmige Normalverteilung eines Kreises bezeichnet bzw. einen Streukreisradius bezeichnet, der die Genauigkeit des GNSS-Signals beschreibt. Dies kann beispielsweise darin bestehen, dass angegeben wird, wie groß der Radius/Durchmesser eines, insbesondere horizontal verlaufenden, Kreises bezogen auf einen Mittelpunkt dieses Kreises ist, innerhalb dessen sich mit einer angenommenen prozentualen Wahrscheinlichkeit, beispielsweise 50%, die tatsächliche Position befindet. Letztendlich stellt der CEP somit eine Angabe zu einer Wahrscheinlichkeitsverteilung dar. Mithilfe dieser Angabe kann somit die Genauigkeit einer durch GNSS-Positionsdaten angegebenen Positionsangabe charakterisiert werden. Parameter, welche die Genauigkeit von GNSS-Positionsdaten beeinflussen können, können beispielsweise die Anzahl der bei einer Positionsbestimmung aktuell empfangenen Satellitensignale, die jeweilige Signalstärke, die Satellitengeometrie, Hindernisse, wie beispielsweise Geländeerhebungen, Gebäude und/oder Bäume, Signalreflexionen, meteorologische Phänomene etc. sein. Je eklatanter und/oder je mehr dieser potentiellen Beeinträchtigungen der GNSS-Signalempfangsqualität an der GNSS-Signal-Empfangseinrichtung vorliegen, desto schlechter ist die Qualität und damit Genauigkeit einer durch GNSS-Positionsdaten definierten Position. Als GNSS-Signal-Qualitätsinformation bzw. als Maß für die Genauigkeit einer durch GNSS-Positionsdaten definierten Position können zusätzlich oder alternativ auch andere statistische Kennzahlen fungieren, wie z.B. die Werte RMS (Root Mean Square) und 2 RMS, die angeben, wie viele Messungen innerhalb bestimmter Genauigkeitsbereiche liegen. Auch der DOP-Wert (Dilution of Precision), der die Qualität der Satellitengeometrie beschreibt und als Verhältnis des Positionsfehlers zum Entfernungsfehler interpretiert werden kann, kann Teil dieser Daten sein. Weitere mögliche Informationen umfassen die Elevationsmaske (der Winkel über dem Horizont, ab dem Satellitensignale genutzt werden), und/oder Angaben zur absoluten und relativen Genauigkeit. Die absolute Genauigkeit gibt dabei an, wie stark die gemessene Position von der wahren Position abweicht, während die relative Genauigkeit beschreibt, wie gut ein GNSS-Sensor kurzfristige Veränderungen ausgleichen kann. Schließlich kann auch die Ausbildung der GNSS-Signal-Empfangseinrichtung selbst ein Indikator für die Qualität einer darüber bestimmten Positionserfassung sein.

Die mit jeweils durch GNSS-Positionsdaten definierten einzelnen Punkte bzw. Positionen können hinsichtlich der jeweils mit ihnen verknüpften GNSS-Signal-Qualitätsinformation im Laufe eines Fräsbetriebes der Bodenfräsmaschine variieren, beispielsweise aufgrund sich ändernder Umgebungsbedingungen etc. Bei einer Vielzahl von entlang einer tatsächlichen Bewegungsbahn der Bodenfräsmaschine sukzessive aufgenommenen GNSS-Positionsdaten, die jeweils für sich entlang der Bewegungsbahn verlaufende Einzelpositionen definieren, können somit gleichzeitig vergleichsweise präzise ermittelte und damit belastbare Positionspunkte und vergleichsweise unpräzise ermittelte und damit nur wenig zuverlässig Positionspunkte umfasst sein. Dies kann dazu führen, dass eine allein auf der Grundlage von GNSS-Positionsdaten rekonstruierte Bewegungsbahn der Bodenfräsmaschine vergleichsweise stark von der tatsächlichen Bewegungsbahn der Bodenfräsmaschine abweicht.

Es kann im Umfang des erfindungsgemäßen Verfahrens daher vorgesehen sein, dass in einem Schritt c) auch ein Erfassen von Positionsänderungsinformationen der Bodenfräsmaschine mithilfe einer lokalen Bewegungserfassungssensoreinrichtung der Bodenfräsmaschine und ein Erstellen von GNSS-unabhängigen Lokal-Positionsdatensätzen der Bodenfräsmaschine aus den Positionsänderungsinformationen erfolgt. Jeder Lokal-Positionsdatensatz kann neben Lokal-Positionsdaten wenigstens eine die Qualität der in dem jeweiligen Lokal-Positionsdatensatz enthaltenen Lokal-Positionsdaten charakterisierende Lokal-Positionsdaten-Qualitätsinformation umfassen. Anders als bei den GNSS-Positionsdaten, zu deren Erfassung auf gegenüber der Bodenfräsmaschine externe, konkret durch Satelliten definierte, Referenzen zurückgegriffen wird bzw. eine absolute Positionsbestimmung der Bodenfräsmaschine zu einem bestimmten Zeitpunkt erfolgt, kann es für die Erfassung der Lokal-Positionsdatensätze vorgesehen sein, dass diese unabhängig von einem Bezug auf GNSS-Satelliten und sogar unabhängig von einem Bezug auf einer außerhalb der Bodenfräsmaschine befindliche Referenz ermittelt werden und dazu, insbesondere ausschließlich, aus Bewegungen der Bodenfräsmaschine selbst an der Bodenfräsmaschine bzw. lokal an bzw. in der Bodenfräsmaschine selbst ermittelt werden. Ausgehend von einer gegebenen Ausgangsposition ermöglicht dies somit eine relative Erfassung einer Positionsänderung aus an der Bodenfräsmaschine selbst ermittelten Bewegungsinformationen. Lokal ist vorliegend daher insbesondere auch so zu verstehen, dass die Positionsdaten anhand eines oder mehrerer, insbesondere über die Zeit verfolgter, Zustands- und/oder Betriebsparameter und/oder Änderungen eines oder mehrerer Zustands- und/oder Betriebsparameter der Bodenfräsmaschine ermittelt werden. Dieser eine oder die mehreren Betriebsparameter können beispielsweise eine Vorschubgeschwindigkeit, ein Lenkwinkel, eine Anzahl Umdrehungen einer oder mehrerer Fahreinrichtungen, eine Beschleunigung etc. und/oder Änderungen derselben sein. Diese Parameter und/oder Parameteränderungen können beispielsweise mit einem oder mehreren Sensoren ermittelt, überwacht und/oder über die Zeit erfasst werden. Auch die Lokal-Positionsdatensätze können jedoch aufgrund verschiedener Unsicherheitsfaktoren mit Ungenauigkeiten behaftet sein, beispielsweise aufgrund eines zeitlichen und/oder örtlichen Abstandes zu der gegebenen Ausgangsposition, auf die sich die Parameter und/oder Parameteränderungen beziehen, aufgrund von Sensorungenauigkeiten, aufgrund von Einsatzbedingungen, wie beispielsweise einer rutschigen Fahrbahnoberfläche, aufgrund von im Fahrbetrieb auftretendem Schlupf an einer oder mehreren der Fahreinrichtungen etc. Da die durch einen Lokal-Positionsdatensatz definierten Position zudem von der gegebenen Ausgangsposition abhängen kann, kann die Genauigkeit der durch einen Lokal-Positionsdatensatz definierten Position mit fortschreitendem zeitlichen Versatz und/oder steigendem Wegstreckenabstand zunehmen. Auf der Grundlage beispielsweise eines oder mehrerer derartiger Unsicherheitsfaktoren kann auch jeder durch Lokal-Positionsdaten definierten Position jeweils eine Lokal-Positionsdaten-Qualitätsinformation zugeordnet und zusammen mit den jeweiligen Lokal-Positionsdaten, insbesondere für genau eine Position, in einem Lokal-Positionsdatensatz zusammengefasst werden.

Aus den Schritten b) und c) stehen somit zwei verschiedene Positionsdatensätze zur Verfügung, die auf verschiedene Arten und Weisen gewonnen wurden (einmal unter Bezugnahme auf ein externes Referenzsystem bzw. unter Nutzung von GNSS-Signalen entsprechend einer direkten Positionsbestimmung und einmal unter Bezugnahme auf an der Bodenfräsmaschine erfasste und einer aus deren Bewegungsverhalten abgeleiteten indirekten Positionsbestimmung bzw. Positionsableitung), deren Einzelpositionspunkte jeweils mit einer Qualitätsinformation verknüpft sind. Insbesondre kann die Qualitätsinformation somit ein Angabe dahingehend sein, wie genau die von dem jeweiligen Positionsdatensatz definierte Position jeweils ist.

Hiervon ausgehend erfolgt nun in einem Schritt d) ein Ermitteln der angenommenen zurückgelegten Bewegungsbahn der Bodenfräsmaschine unter Berücksichtigung der GNSS-Positionsdatensätze und der Lokal-Positionsdatensätze durch eine Auswerteeinrichtung. Um die final angenommene Bewegungsbahn zu bestimmen, kann die Auswerteeinrichtung somit auf wenigstens die zwei verschiedenen Positionsdatensätze zurückgreifen, was letztendlich mit umfassen kann, dass auch die in den beiden Positionsdatensätzen umfassten Positionsdaten-Qualitätsinformationen in die finale Festlegung der angenommenen zurückgelegten Bewegungsbahn mit einfließen können. Dadurch ist es möglich, dass beispielsweise für die angenommene zurückgelegte Bewegungsbahn diejenigen Positionen aus den GNSS-Positionsdatensätzen und aus den Lokal-Positionsdatensätzen herausisoliert werden, die jeweils eine höhere Qualität und/oder die höchste Qualität aufweisen, insbesondere in Bezug auf einen zueinander zeitlich identischen oder zumindest zeitlich nahe beieinanderliegenden Zeitpunkt ihrer jeweiligen Erfassung. Wesentlich kann somit zunächst sein, dass das Verfahren ein direktes oder indirektes Übermitteln, kabellos und/oder kabelgebunden, der Informationen aus den Schritten b) und c) an die Auswerteeinrichtung umfasst, so dass der Auswerteeinrichtung gleichzeitig sowohl die Lokal-Positionsdatensätze als auch die GNSS-Positionsdatensätze zur Ermittlung einer angenommenen Bewegungsbahn der Bodenfräsmaschine vorliegen. In der Auswerteeinrichtung kann dazu ein Zusammenführen der Lokal-Positionsdatensätze und der GNSS-Positionsdatensätze und/oder ein Vergleichen und/oder Abwägen derselben durch die Auswerteeinrichtung etc. erfolgen, wie weiter erläuternd nachstehend noch näher exemplarisch angegeben.

In einem zwischen den Schritten b) und/oder c) und dem Schritt d) erfolgenden Zwischenschritt kann ein wenigstens übergangsweises Speichern der Informationen bzw. der GNSS-Positionsdatensätze und der Lokal-Positionsdatensätze aus den Schritten b) und c) in einer Speichereinrichtung vorgesehen sein. Es ist somit möglich, dass der Schritt d) nicht notwendigerweise während eines laufenden Fräsbetriebes der Bodenfräsmaschine durchgeführt wird, sondern erst beispielsweise beim Erreichen eines Endpunktes einer Frässpur und/oder einem Stoppen eines Fahrbetriebes der Bodenfräsmaschine und/oder einer Aktivierung eines Auswertemodus der Auswerteeinrichtung etc. erfolgt. Dazu können dann die in der Speichereinrichtung gespeicherten GNSS-Positionsdatensätze und Lokal-Positionsdatensätze von der Auswerteeinrichtung aus der Speichereinrichtung abgerufen werden.

Die GNSS-Positionsdatensätze und/oder die Lokal-Positionsdatensätze können in den Schritten b) und c), insbesondere zueinander koordiniert, zeitabhängig erfasst und/oder erstellt werden. Ein zeitabhängiges Erfassen und/oder Erstellen bezeichnet vorliegend ein zeitlich getaktetes Erfassen und/oder Erstellen der GNSS-Positionsdatensätze und/oder der Lokal-Positionsdatensätze. Dies kann beispielsweise eine in einem regelmäßigen zeitlichen Abstand erfolgende Erfassung der GNSS-Positionsdaten und/oder Lokal-Positionsdaten sowie eine in einem regelmäßigen zeitlichen Abstand erfolgende Erstellung der Lokal-Positionsdatensätze und/oder der GNSS-Positionsdatensätze bezeichnen. Ideal kann es sein, wenn das Erfassen und/oder Erstellen zeitlich derart zueinander koordiniert erfolgt, dass zumindest das Erfassen der GNSS-Positionsdaten und der Lokal-Positionsdaten zueinander synchronisiert bzw. zumindest teilweise, idealerweise regelmäßig und besonders bevorzugt immer, gleichzeitig erfolgt, so dass für den jeweiligen Aufnahmezeitpunkt gleichzeitig jeweils GNSS-Positionsdaten und Lokal-Positionsdaten der Bodenfräsmaschine vorliegen. Dies kann von beispielsweise der Auswerteeinrichtung gesteuert werden.

Das zwischen der Erfassung einzelner GNSS-Positionsdaten und/oder Lokal-Positionsdaten liegende Zeitintervall kann über den gesamten Fräsbetrieb der Bodenfräsmaschine hinweg konstant sein. Entsprechend können dann auch, idealerweise ebenfalls in gleichmäßigen Zeitintervallen, auf diesen Positionsdaten beruhende GNSS-Positionsdatensätze und/oder Lokaldatensätze erstellt werden. Es kann allerdings vorteilhaft sein, wenn das Verfahren derart abläuft, dass ein Zeitintervall zum zeitabhängigen Erfassen und/oder Erstellen in den Schritten b) und c) dynamisch variabel ist bzw. sich über den Zeitraum des Fräsbetriebes hinweg verändert, beispielsweise zur Anpassung an Betriebssituationen, in denen eine Bestimmung einer Bewegungsbahn eher ungenauer oder eher genauer ist. So kann es beispielsweise vorgesehen sein, dass während einer Geradeausfahrt das Zeitintervall zum Erfassen der GNSS- und/oder Lokal-Positionsdaten und/oder zum Erstellen der GNSS- und/oder Lokal-Positionsdatensätze ausgehend von einem, insbesondere durch wenigstens einen GNSS-Positionsdatensatz definierten, erfassten Startpunkt, sogar gar keine GNSS-Positionsdaten und/oder Lokal-Positionsdaten erfasst und/oder GNSS- und/oder Lokal-Positionsdatensätze erstellt werden, da im Rahmen einer Geradeausfahrt vergleichsweise wenig Abweichungen hiervon auftreten. Im Rahmen einer Kurvenfahrt kann sich dies dagegen ganz anders verhalten, denn durch beispielsweise an den Fahreinrichtungen auftretenden Schlupf kann die Wahrscheinlichkeit, dass die tatsächliche Bewegungsbahn der Bodenfräsmaschine von einer vorgegebenen Bewegungsbahn abweicht, steigen. Wird somit beispielsweise ausgehend von einer Geradeausfahrt eine Kurvenfahrt eingeleitet, beispielsweise ermittelt über einen Lenkwinkelsensor und/oder eine Betätigung einer Lenkeinrichtung und/oder Lenkbefehleingabeeinrichtung, kann es vorgesehen sein, dass dann Lokal-Positionsdaten und/oder GNSS-Positionsdaten in zeitlich kürzeren Zeitintervallen erfasst und/oder Lokal-Positionsdatensätze und/oder GNSS-Positionsdatensätze in zeitlich kürzeren Zeitintervallen ermittelt werden. Ergänzend oder alternativ können beispielsweise die Zeitintervalle auch dann verkürzt werden, wenn die aktuelle GNSS-Signal-Qualitätsinformation vergleichsweise gut bzw. beispielsweise die Genauigkeit des GNSS-Positionssignal vergleichsweise hoch ist und umgekehrt.

Anstelle oder ergänzend zu der zeitabhängigen Taktung ist es auch möglich, eine wegstreckenabhängige Taktung vorzusehen. Diese kann auch dynamisch variable Wegstreckenintervalle aufweisen, beispielsweise abhängig von einem oder mehreren der vorstehend zur zeitabhängigen Erfassung genannten Kriterien.

Insbesondere auch, um beispielsweise verschiedene GNSS-Positionsdatensätze und/oder Lokal-Positionsdatensätze besser ins Verhältnis zueinander setzen zu können und/oder miteinander vergleichen zu können, kann es vorteilhaft sein, wenn jedem GNSS-Positionsdatensatz und/oder jedem Lokal-Positionsdatensatz jeweils ein Zeitstempel zugeordnet wird bzw. von diesem umfasst ist. Dazu kann die Bodenfräsmaschine beispielsweise ein oder mehrere Zeitglieder umfassen. Der jeweilige Zeitstempel kann insbesondere derart mit dem jeweiligen GNSS-Positionsdatensatz und/oder Lokal-Positionsdatensatz verknüpft werden, dass dieser dem Zeitpunkt der Erfassung der jeweiligen Lokal-Positionsdaten und/oder GNSS-Positionsdaten entspricht. Der Zeitstempel kann eine absolute Zeitangabe oder auch eine relative Zeitangabe, beispielsweise in Form einer Zeitdifferenz ab der Aufnahme eines Fräsbetriebes und/oder aber der Erfassung vorhergehender Lokal- und/oder GNSS-Positionsdaten oder ähnliches, sein. Der Zeitstempel kann durch die Auswerteeinrichtung, die GNSS-Signal-Empfangseinrichtung und/oder die Bewegungserfassungssensoreinrichtung dem jeweiligen Lokal-Positionsdaten und/oder GNSS-Positionsdaten hinzugefügt werden.

Hinsichtlich der konkret im Schritt c) erfassten Daten bestehen verschiedene Möglichkeiten, wobei das Ziel vorzugsweise eine Möglichkeit ist, aus den an der Bodenfräsmaschine und deren Elementen selbst durch die Bewegungserfassungssensoreinrichtung gemessenen Parametern auf eine Bewegungsbahn der Bodenfräsmaschine, insbesondere in Bezug auf einen definierten Ausgangspunkt, rückschließen zu können. Dazu kann es insbesondere vorgesehen sein, dass die Bodenfräsmaschinen einen oder mehrere geeignete Sensoren als Teil der Bewegungserfassungssensoreinrichtung umfasst, die Positions- und/oder Verstellparameter, insbesondere in absoluter und/oder relativer Hinsicht, einer oder mehrerer der die Bewegung der Bodenfräsmaschinen gegenüber dem Bodenuntergrund definierenden Einrichtungen erfasst.

Konkret kann dies beispielsweise ein Erfassen von Lenkvorgaben umfassen. Dazu kann die Bewegungserfassungssensoreinrichtung beispielsweise einen oder mehrere Stellweg- und/oder Positionssensoren aufweisen, die Stellweg- und/oder Verstellpositionen einer oder mehrerer Bedienelemente, über die, beispielsweise von einem Bediener, Lenkvorgaben, insbesondere auch manuell, vorgegeben werden können. Ein solches Bedienelement kann beispielsweise ein Lenkhebel oder ein Lenkrad sein. Ergänzend oder alternativ kann es auch vorgesehen sein, dass an einem oder mehreren Elementen einer wenigstens teilweise mechanisch wirkenden Lenkeinrichtung ein oder mehrere Lenkwinkelsensoren vorgesehen sind, die einen bestehenden Lenkwinkel einer oder mehrerer Fahreinrichtung, beispielsweise relativ zum Maschinenrahmen, direkt oder indirekt erfassen. Beispielsweise können eine oder mehrere Wegmesseinrichtungen umfasst sein, die die Stellposition eines oder mehrerer Lenkaktoren, insbesondere beispielsweise Lenkhydraulikzylinder, erfassen.

Ergänzend oder alternativ kann der Schritt c) auch ein Erfassen einer Wegstrecke betreffen. Dies kann beispielsweise dadurch erfolgen, dass die Anzahl Umdrehungen einer oder mehrerer Fahreinrichtungen und/oder einem oder mehreren mit diesen korrespondierend rotierenden Elementen der Bodenfräsmaschine, beispielsweise mithilfe eines Drehzahlsensors, innerhalb eines bekannten und/oder definierten Zeitfensters erfolgt.

Ergänzend oder alternativ kann der Schritt c) auch ein Erfassen eine Fahrgeschwindigkeit und/oder von Beschleunigungen umfassen, um beispielsweise das Ausmaß einer innerhalb eines Zeitfensters zurückgelegten Wegstrecke zu messen. Dazu kann die Bodenfräsmaschine einen oder mehrere Fahrgeschwindigkeitssensoren und/oder Beschleunigungssensoren aufweisen.

Ergänzend oder alternativ kann der Schritt c) ein Erfassen von Fahrbewegungen anhand bzw. mithilfe eines oder mehrere Intertialsensoren umfassen.

Weiter ergänzend oder alternativ ist es möglich, dass der Schritt c) ein Erfassen von Fahrbewegungen anhand von Kamerabilden umfasst. Dazu kann die Bodenfräsmaschine eine oder mehrere Kameras aufweisen und eine Bewegung der Bodenfräsmaschine relativ zum Bodenuntergrund aus dem Vergleich mehrere aufeinander folgend aufgenommener Kamerabilder mithilfe einer geeigneten Bildverarbeitungssoftware erfolgen.

Dadurch, dass sowohl für die GNSS-Positionsdaten als auch für die Lokal-Positionsdaten eine Qualitätsinformation, insbesondere beispielsweise eine die jeweilige Genauigkeit der jeweiligen Positionsdaten charakterisierende Genauigkeitsinformation, zur Verfügung steht, kann es im Schritt d) vorgesehen sein, dass ein Gewichten der GNSS-Positionsdaten und der Lokal-Positionsdaten unter Einbeziehung der GNSS-Signal-Qualitätsinformation und/oder der Lokal-Positionsdaten-Qualitätsinformation erfolgt. Dies kann insbesondere bedeuten, dass zum Ermitteln der angenommenen zurückgelegten Bewegungsbahn Paare einzelner gleichzeitig oder zumindest zeitlich nah beieinander liegender GNSS-Positionsdatensätze und Lokal-Positionsdatensätze von der Auswerteeinheit gegeneinander abgewogen werden können, insbesondere unter Heranziehung vordefinierter Abwägungskriterien.

Dies kann beispielsweise bedeuten, dass von Paaren, beispielsweise zeitlich gleichzeitig oder zumindest nahe beieinander erfasster, eines GNSS-Positionsdatensatzes und eines Lokal-Positionsdatensatzes für die Ermittlung der angenommenen Bewegungsbahn von der Auswerteeinrichtung derjenige Positionsdatensatz ausgewählt und weiter berücksichtigt wird, der eine gegenüber dem jeweils anderen Positionsdatensatz bessere Qualität, insbesondere höhere Genauigkeit, aufweist. Diese Form der Auswahl eines Positionsdatensatzes aus einem Paar mit einem GNSS-Positionsdatensatz und mit einem Lokal-Positionsdatensatz bzw. eine jeweilige Elimination eines der beiden Datensätze kann insbesondere dann von der Auswerteeinrichtung durchgeführt werden, wenn beispielsweise die Qualitätsinformation von einem der beiden Positionsdatensätze außerhalb eines definierten Bereiches und/oder ober- und/oder unterhalb einer definierten Schwelle liegt und/oder beispielsweise ein Quotient der jeweiligen Qualitätsinformationen ober- oder unterhalb eines definierten Grenzwertes liegt. In diesem Fall wählt die Auswerteeinrichtung somit den qualitativ besseren, insbesondere genaueren, Positionsdatensatz aus einem Paar jeweils eines GNSS-Positionsdatensatz und eines Lokal-Positionsdatensatzes aus.

Ergänzend oder alternativ kann im Schritt d) von der Auswerteeinrichtung ein Ermitteln von Schätz-Positionsdaten unter Berücksichtigung der GNSS-Positionsdatensätze und der Lokal-Positionsdatensätze, insbesondere unter Einbeziehung und/oder in Abhängigkeit von deren jeweiliger Qualitätsinformation, durch die Auswerteeinrichtung erfolgen. Schätz-Positionsdaten bezeichnen vorliegend insbesondere Positionsdaten, die nicht, wie beispielsweise die GNSS-Positionsdaten und die Lokal-Positionsdaten, unmittelbar auf eine Messung einer Position oder einer Positionsänderung oder eines Betriebs- und/oder Zustandsparameters beruhen, sondern die unter Berücksichtigung sowohl der Lokal-Positionsdaten als auch der GNSS-Positionsdaten ermittelt werden. Neben jeweils einer durch einen Positionsdatensatz und einen GNSS-Positionsdatensatz beschriebenen Position können die Schätz-Positionsdaten somit eine dritte Position definieren. Diese kann mit einer durch einen GNSS-Positionsdatensatz und/oder durch einen Lokal-Positionsdatensatz bezeichneten Position bzw. zumindest hinsichtlich einer höchsten Lagewahrscheinlichkeit identisch sein oder auch eine weitere, dritte Position sein, die sich von den durch den GNSS-Positionsdatensatz und/oder durch den Lokal-Positionsdatensatz definierten Positionen unterscheidet. Eine Einbeziehung der jeweiligen Qualitätsinformationen der gemeinsam zur Ermittlung von Schätz-Positionsdaten eines Wegpunktes berücksichtigten GNSS-Positionsdatensätze und Lokal-Positionsdatensätze kann durch die Auswerteeinrichtung beispielsweise derart erfolgen, dass die durch den jeweiligen GNSS-Positionsdatensatzes und Lokal-Positionsdatensatzes definierten Positionen zusammen mit ihren jeweiligen Qualitätsinformationen, insbesondere beispielsweise Wahrscheinlichkeitsverteilungen, miteinander überlagert werden und derjenige resultierende Positionspunkt mit der gemeinsam höchsten Wahrscheinlichkeit als die in den Schätz-Positionsdaten definierte Position der Bodenfräsmaschine zum jeweiligen Zeitpunkt angenommen wird. Dies kann rechnerisch beispielsweise durch einen der folgenden Ansätze erfolgen: Es kann ein gewichteter Durchschnitt der jeweiligen durch einen GNSS-Positionsdatensatz definierten Position und der jeweiligen durch einen Lokal-Positionsdatensatz definierten Position gebildet werden. Hierbei kann die Gewichtung zum Beispiel durch eine Funktion gegeben sein, die basierend auf den jeweiligen Qualitätsinformationen zwei sich zu 1 addierende nicht-negative Gewichte bestimmt, derart, dass das erste Gewicht umso größer ist, je höher die Qualität des GNSS-Positionsdatensatzes gemäß der entsprechenden Qualitätsinformation ist, und derart, dass das zweite Gewicht, umso größer ist, je höher die Qualität des Lokal-Positionsdatensatzes gemäß der entsprechenden Qualitätsinformation ist. Der resultierende Positionspunkt kann dann bestimmt werden als entsprechend gewichtete Summe der Koordinaten aus den beiden Positionsdatensätzen. Enthält beispielsweise die jeweilige Qualitätsinformation Werte σG und σL zur jeweiligen Wahrscheinlichkeitsverteilung, wobei beispielsweise für die jeweilige Kovarianzmatrix ΣG und ΣL der jeweiligen Wahrscheinlichkeitsverteilung angenommen wird, dass ΣG = σG2*I und ΣL = σL2*I, wobei I die zweidimensionale Einheitsmatrix bezeichnet, und bezeichnet man die Koordinaten gemäß des GNSS-Positionsdatensatzes mit x und die Koordinaten gemäß des Lokal-Positionsdatensatzes mit y, so kann man die Koordinaten der Schätz-Positionsdaten beispielsweise definieren als (σL2*x + σG2*y)/(σG2 + σL2). Die Wahrscheinlichkeitsverteilungen können beispielsweise zirkuläre zweidimensionale Normalverteilungen sein. Die Schätzposition kann beispielsweise aus dem Prinzip der Maximum-Likelihood-Schätzung bestimmt werden. Dieser Ansatz kann auch für verschiedene andere Wahrscheinlichkeitsverteilungen verwendet werden. Dabei kann es auch vorkommen, dass der entsprechende Maximum-Likelihood-Schätzer außerhalb der von den beiden Randpunkten begrenzten Strecke liegt.

Das Ermitteln der angenommenen zurückgelegten Bewegungsbahn der Bodenfräsmaschine durch die Auswerteeinrichtung im Schritt d) kann ausschließlich auf der Grundlage von Schätz-Positionsdaten von der Auswerteeinrichtung durchgeführt wird oder auf der Grundlage einer Zusammenschau von Schätzpositionsdaten und GNSS- und/oder Lokal-Positionsdaten. Die Auswerteeinrichtung muss somit beispielsweise für jeden Wegpunkt einer durch mehrere Wegpunkte definierten angenommenen Bewegungsbahn nicht notwendigerweise immer auf durch Schätz-Positionsdaten definierte Wegpunkte zurückgreifen, sondern kann hierzu auch neben durch Schätz-Positionsdaten definierten Wegpunkten auch durch nur GNSS-Positionsdaten und/oder nur Lokal-Positionsdaten definierte Wegpunkte mit berücksichtigen. Dies kann beispielsweise dann sinnvoll sein, wenn sich für ein Paar eines Lokal-Positionsdatensatzes und eines GNSS-Positionsdatensatzes d.h. für Paare an Positionsdatensätzen, deren GNSS-Positionsdaten und Lokal-Positionsdaten zeitgleich oder zumindest zeitlich vergleichsweise nah beieinander aufgenommen worden sind, im Rahmen der Auswertung durch die Auswerteeinrichtung zeigt, dass einer der beiden Positionsdatensätze fehlerhaft ist. Eine Fehlerhaftigkeit eines Positionsdatensatzes kann beispielsweise dann angenommen werden, wenn einer oder mehrere der Sensoren wenigstens übergangsweise ausfallen oder Positionsänderungen der Bodenfräsmaschine ermittelt werden, die unmöglich und/oder nicht plausibel sind, wie beispielsweise eine Positionsänderung in Rückwärtsrichtung, wenn sich die Bodenfräsmaschine nur in Vorwärtsrichtung bewegt hat bzw. nur in Vorwärtsrichtung angetrieben worden ist. Eine Fehlerhaftigkeit eines oder mehrerer der GNSS-Positionsdaten und/oder Lokal-Positionsdaten kann beispielsweise auch dann angenommen werden, wenn einer oder mehrere der Sensoren, insbesondere der Bewegungserfassungssensoreinrichtung, Messwerte ermitteln, die außerhalb eines definierten Messbereiches und/oder ober- und/oder unterhalb eines definierten Schwellenwertes etc. liegen. Insbesondere für die GNSS-Signal-Empfangseinrichtung kann eine Fehlerhaftigkeit wiederum beispielsweise dann angenommen werden, wenn die Anzahl empfangener Satellitensignale unterhalb einer definierten Mindestanzahl liegt und/oder Sprünge in durch zwei, insbesondere zeitlich aneinander anschließende, GNSS-Positionsdaten definierten Positionen auftreten, die unmöglich sind, wie beispielsweise ein Versatz der Position der Bodenfräsmaschine über unrealistische Wegstrecken hinweg und/oder in Richtungen, die mit der Architektur und Gestaltung der jeweiligen Bodenfräsmaschine grundsätzlich gar nicht realisierbar wären.

Das Ermitteln der angenommenen zurückgelegten Bewegungsbahn der Bodenfräsmaschine kann wenigstens teilweise auf der Grundlage der Schätz-Positionsdaten erfolgen. Werden sowohl die GNSS-Positionsdaten und die Lokal-Positionsdaten zueinander koordiniert erfasst, ist es sinnvoll, dass jedem Erfassungszeitpunkt im Rahmen der Auswertung durch die Auswerteeinrichtung genau eine entweder durch Schätz-Positionsdaten, GNSS-Positionsdaten oder Lokal-Positionsdaten definierte Position zugewiesen wird. Dies bedeutet, dass der Auswerteeinrichtung zum Ermitteln der angenommenen zurückgelegten Bewegungsbahn idealerweise zu jedem, beispielsweise durch einen Erfassungszeitpunkt für die GNSS-Positionsdaten und die Lokal-Positionsdaten definierten, Wegpunkt der Bewegungsbahn der Bodenfräsmaschine zunächst erst einmal drei Positionen zur Verfügung stehen können, konkret jeweils eine durch die GNSS-Positionsdaten, eine durch die Lokal-Positionsdaten und eine durch die Schätz-Positionsdaten definierte Position. Aufgrund beispielsweise von einem oder mehreren der vorstehenden Kriterien kann nun eine Auswahl durch die Auswerteeinrichtung zu jedem dieser Wegpunkt vorgenommen werden und die daraus resultierende Vielzahl an Wegpunkten schließlich zur Ermittlung der angenommenen zurückgelegten Bewegungsbahn der Bodenfräsmaschine herangezogen werden. Beispielsweise könnte immer die durch die Schätz-Positionsdaten definierte Position verwendet werden. Alternativ kann abhängig von vordefinierten Grenzwerten entschieden werden: So könnte beispielsweise, wenn der Abstand der durch die Schätz-Positionsdaten definierten Position zur entsprechenden durch die GNSS-Positionsdaten definierten Position um einen Faktor K größer ist als der entsprechende Abstand zur entsprechenden durch die Lokal-Positionsdaten definierten Position, die durch die Lokal-Positionsdaten definierte Position verwendet werden. K könnte beispielsweise 2, 3, 4, 5, 6 oder ein anderer Wert als 2 sein. Dies hätte den Vorteil, dass Ausreißer, die mit hoher Unsicherheit behaftet sind, das Ergebnis nicht verzerren. In die andere Richtung könnte K 1/2, 1/3, 1/4, 1/5, 1/6 oder ein anderer Wert zwischen 0 und 1 sein.

Genauso wie es möglich ist, dass unter bestimmten Voraussetzungen ohne die Ermittlung von Schätz-Positionsdaten auf durch einen GNSS-Positionsdatensatz und/oder einen Lokal-Positionsdatensatz definierte Positionsdaten zurückgegriffen wird, können ergänzend oder alternativ Kriterien definiert werden, auf deren Grundlage überhaupt erst Schätz-Positionsdaten von der Auswerteeinrichtung ermittelt und/oder zur weiteren Auswertung durch die Auswerteeinrichtung herangezogen werden. Dies kann beispielsweise dann sinnvoll sein, wenn die jeweilige GNSS-Signal-Qualitätsinformation außerhalb eines definierten Qualitätsschwellenwertes liegt, beispielsweise die Genauigkeit einer erfassten GNSS-Position einen definierten Schwellenwert unterschreitet und/oder die Größe eines Streukreisradius bzw. CEP-Wertes einen definierten Schwellenwert überschreitet. Insbesondere für einen solchen Fall kann es beispielsweise zudem vorgesehen sein, dass die Ausgangsposition, die zur Ermittlung von durch Lokal-Positionsdaten definierte Positionen herangezogen wird, eine durch GNSS-Positionsdaten definierte Position ist bzw. sein muss, deren GNSS-Signal-Qualitätsinformation eine Mindestqualität aufweist. Dies kann beispielsweise dann gegeben sein, wenn die Genauigkeit einer erfassten GNSS-Position einen definierten Schwellenwert nicht unterschreitet und/oder die Größe eines Streukreisradius bzw. CEP-Wertes einen definierten Schwellenwert nicht unterschreitet. Ergänzend oder alternativ ist es auch möglich, dass die zur Ermittlung einer auf der Grundlage von Lokal-Positionsdaten beruhenden Position herangezogene Ausgangsposition eine durch GNSS-Positionsdaten definierte Position ist, die dem jeweiligen Lokal-Positionsdatensatz zeitlich vorgelagert ist. Dies kann der unmittelbar zeitlich vorgelagerte GNSS-Positionsdatensatz oder auch ein GNSS-Positionsdatensatz sein, der wenigstens eine Mehrzahl vorhandener GNSS-Positionsdatensätze und/oder um wenigstens ein definiertes Zeitintervall älter als der jeweilige Lokal-Positionsdatensatz ist. Auch hier kann eine Auswahl in qualitativer Hinsicht erfolgen, dass nur ein solcher GNSS-Positionsdatensatz zur Definition einer Ausgangsposition herangezogen werden kann, der eine hinreichende Genauigkeit bzw. eine ausreichende Qualität aufweist. Auch hierzu kann daher beispielsweise ein entsprechender Schwellenwert definiert sein.

Ergänzend oder alternativ kann es auch vorgesehen sein, dass das Verfahren und insbesondere im Schritt d) nur dann Schätz-Positionsdaten zum Ermitteln der angenommenen zurückgelegten Bewegungsbahn herangezogen werden, wenn sowohl die GNSS-Positionsdaten als auch die Lokal-Positionsdaten bzw. die durch sie definierten Positionen, insbesondere für einen gemeinsamen definierten Erfassungszeitpunkt, außerhalb eines definierten Toleranzbereiches voneinander abweichen.

Das Verfahren kann derart ablaufen, dass GNSS-Positionsdaten und/oder Lokal-Positionsdaten dann zur Ermittlung der angenommenen zurückgelegten Bewegungsbahn von der Auswerteeinrichtung ignoriert werden, wenn sie im Vergleich zu zeitlich vor- und/oder nachgelagerten Positionsdaten außerhalb definierter Maximaldifferenzgrenzen liegen und/oder ihre Qualitätsinformationen außerhalb eines zulässigen Bereiches liegen, wie vorstehend bereits erwähnt. Dies kann beispielsweise dann auftreten, wenn es sich bei konkreten Positionsdaten um, zumindest wahrscheinliche, Ausreißerwerte handelt, wie vorstehend bereits beschrieben.

Sollten für ein Paar, insbesondere zeitgleich erfasster, GNSS-Positionsdaten und Lokal-Positionsdaten wenigstens eine oder beide der durch sie definierten Positionen, beispielsweise aufgrund der vorstehend genannten Kriterien, als Ausreißerwert von der Auswerteeinrichtung eingestuft und dadurch zur Erstellung der angenommenen Bewegungsbahn nicht weiter berücksichtigt werden, kann es vorgesehen sein, dass die dadurch entstehende Lücke an Positionsdaten durch Interpolation oder Extrapolation über zeitlich vor- und/oder nachgelagerte jeweilige Positionsdaten gefüllt wird. Auf diese Weise können somit, insbesondere zu einem Zeitpunkt, zu dem eine als Ausreißerwert eingestufte, durch GNSS-Positionsdaten und/oder durch Lokal-Positionsdaten definierte Position von der Auswerteeinrichtung zur weiteren Berücksichtigung aussortiert worden ist, wahrscheinliche, auf zeitlich vor- und/oder nachgelagerten GNSS-Positionsdaten oder Lokal-Positionsdaten beruhende und durch Extra- oder Interpolation geschätzte Ersatz-GNSS-Positionsdaten und/oder Ersatz-Lokal-Positionsdaten gewonnene Ersatz-Positionen durch die Auswerteeinheit berechnet werden. Es kann ferner vorgesehen sein, dass diese Ersatz-GNSS-Positionsdaten und/oder Ersatz-Lokal-Positionsdaten bzw. die durch sie definierten Ersatz-Positionen von der Auswerteeinrichtung zur Erstellung von Schätz-Positionsdaten herangezogen werden. Weiter ergänzend oder alternativ kann es auch vorgesehen sein, dass Ersatz-GNSS-Positionsdaten manuell durch einen Bediener eingegeben bzw. nachgetragen werden, wobei es hierzu vorteilhaft sein kann, dass in einem Zwischenschritt ein Anzeigen von Ausreißerwerten erfolgt und insbesondere eine manuelle Vorgabe von Ersatz-Positionsdaten auf der Grundlage der angezeigten Ausreißerwerte erfolgt. Weiter ergänzend oder alternativ kann es vorgesehen sein, dass Ersatz-Positionsdaten, insbesondere im Nachgang, unter Rückgriff auf eine externe Quelle erzeugt werden.

Eine Initialisierung des Schrittes d), insbesondere auch umfassend ein Ermitteln von Schätz-Positionsdaten, kann von einem oder mehreren Faktoren abhängen. Grundsätzlich kann es vorgesehen sein, dass mit der Beendigung eines Fräsbetriebes eine zeitlich rückschauende Ermittlung einer angenommenen zurückgelegten Bewegungsbahn der Bodenfräsmaschine erfolgt, beispielsweise zu Dokumentations- und/oder Abrechnungszwecken. Insbesondere hinsichtlich einer Erstellung/Berechnung einer oder mehrerer Schätz-Positionsdaten können ergänzend oder alternativ Betriebsereignisse definiert werden, die dies auslösen können. Ein solches Ereignis kann beispielsweise eine Änderung einer Fahrrichtung der Bodenfräsmaschine, insbesondere das Einleiten einer Kurvenfahrt aus einer Geradeausfahrt bzw. das Beenden einer Geradeausfahrt im laufenden Fahrbetrieb, speziell während eines Fräsvorgangs, sein. Ergänzend oder alternativ kann dies auch dann ausgelöst werden, wenn eine Fahrbewegung der Bodenfräsmaschine gestoppt und/oder aus einer Standposition aufgenommen wird. Weiter ergänzend oder alternativ können auch ein Zeit- und/oder Wegintervall definiert werden, nach deren Ablauf eine Bewegungsbahn von der Auswerteeinrichtung ermittelt wird. Schließlich ist es auch ergänzend oder alternativ möglich, dass ein Über- und/oder Unterschreiten insbesondere der GNSS-Signal-Qualitätsinformation eines definierten Schwellenwertes und/oder das Verlassen eines definierten Bereiches das Ermitteln einer von Schätz-Positionsdaten und/oder einer angenommenen Bewegungsbahn durch die Auswerteeinrichtung auslöst.

Es kann ferner vorgesehen sein, dass die Auswerteeinrichtung derart ausgebildet ist, dass sie priorisiert immer zunächst GNSS-Positionsdatensätze zur Ermittlung der angenommenen Bewegungsbahn heranzieht, es sei denn, die in einem oder mehreren GNSS-Positionsdatensätzen umfasste Qualitätsinformation gibt an, dass die Qualität der empfangenen GNSS-Positionsdaten zu niedrig ist. Insofern kann es vorgesehen sein, dass zunächst die GNSS-Positionsdatensätze priorisiert gegenüber den Lokal-Positionsdatensätzen von der Auswerteeinrichtung zur Erstellung der angenommenen Bewegungsbahn berücksichtigt werden.

Der sich aus dem Lokal-Positionsdatensatz ergebenden Position können über die Zeit erfasste Betriebs- und/oder Zustandsparameter und/oder deren Änderung zu Grunde liegen. Letztendlich kann die im Lokal-Positionsdatensatz umfasste Information somit eine Verlagerung der Bodenfräsmaschine bezogen auf eine Referenzposition hin zu einer anderen Position definieren. Die Wahl der Referenzposition kann dabei variieren. Beispielsweise kann dies die Startposition der Bodenfräsmaschine bei einer Aufnahme des Fräsbetriebes sein, die beispielsweise separat eingemessen werden kann oder aber ein GNSS-Positionsdatensatz ist. Alternativ kann dies auch eine nicht näher definierte Nullposition ohne beispielsweise Koordinatenangaben sein. Zum Erstellen eines Lokal-Positionsdatensatz im laufenden bei einem fortgesetzten Fräsbetrieb kann auf wenigstens einen oder mehrere zeitlich unmittelbar vorgelagerte Schätz-Positionsdatensätze und/oder einen oder mehrere zeitlich vor- und/oder nachgelagerte GNSS-Positionsdatensätze oder auf die Null-Position zurückgegriffen werden.

Das konkrete Erstellen der angenommenen zurückgelegten Bewegungsbahn kann auf verschiedenen Arten und Weisen erfolgen. Ein bevorzugtes Verfahren hierzu kann eine von der Auswerteeinrichtung durchgeführte Spline-Interpolation unter Berücksichtigung der GNSS-Positionsdaten, der Lokal-Positionsdaten und/oder der Schätz-Positionsdaten bzw. den durch sie definierten Positionen als Stützstellen sein. Für jeden Wegabschnitt bzw. für jeden Messzeitpunkt kann somit eine Auswahl getroffen werden, ob, insbesondere unter Berücksichtigung einer oder mehrerer der vorstehend erläuterten Auswahlkriterien, die durch GNSS-Positionsdaten, die durch Lokal-Positionsdaten und/oder, sofern vorhanden, die durch Schätz-Positionsdaten definierten Positionen zur Erstellung der angenommenen zurückgelegten Bewegungsbahn ausgewählt werden. Insgesamt kann auf diese Weise eine Kette von zeitlich aufeinanderfolgenden Positionsdaten bzw. Positionen entlang der Bewegungsbahn erhalten werden, die zumindest teilweise eine bessere Qualität bzw. höhere Genauigkeit aufweisen, als beispielsweise allein über GNSS-Positionsdatensätze definierte Positionen bzw. Wegpunkte. Diese Auswahl kann anschließend zur Ermittlung bzw. Erstellung der angenommenen zurückgelegten Bewegungsbahn herangezogen werden. Die auf diese Weise erhaltene angenommene Bewegungsbahn liegt hinsichtlich ihres Verlaufes mit höherer Wahrscheinlichkeit näher an der tatsächlich durch die Bodenfräsmaschine zurückgelegten Bewegungsbahn, als eine auf der Grundlage allein von GNSS-Positionsdaten oder allein von Lokal-Positionsdaten ermittelte Bewegungsbahn. Weitere mögliche Verfahren sind die Verwendung von kubischen Splines oder gewichteten Splines, bei denen verschiedene Stützstellen unterschiedlich stark gewichtet werden, natürlichen Splines, linearer oder nicht-linearer Interpolationen, Bézierkurven, parametrischen Spline-Interpolationen, die die Interpolation von Kurvenzügen, deren X-Werte nicht streng monoton wachsend sind, erlauben, lokale gewichtete Regressionen oder sonstige beliebige Logiken, die eine Verbindung der entsprechenden Koordinaten in der entsprechenden Reihenfolge ergeben.

Ein weiterer Aspekt der Erfindung betrifft eine, insbesondere selbstfahrende, Bodenfräsmaschine, umfassend eine GNSS-Signalempfangseinrichtung und eine lokale Bewegungserfassungssensoreinrichtung. Die Bodenfräsmaschine kann ferner einer Auswerteeinrichtung umfassen, die zur Durchführung des erfindungsgemäßen Verfahrens ausgebildet ist, insbesondere auch zur Durchführung bevorzugter Weiterbildungen des erfindungsgemäßen Verfahrens. Die GNSS-Signalempfangseinrichtung und die lokale Bewegungserfassungseinrichtung können über eine oder mehrere Signalübertragungsverbindungen mit der Auswerteeinrichtung in Signalübertragungsverbindung stehen und aktuelle Messignale an diese übertragen. Hierbei kann es sich beispielsweise wenigstens teilweise um ein CAN-Bussystem handeln.

Die Bodenfräsmaschine kann ferner ein oder mehrere Elemente bzw. Einrichtungen umfassen, die zur Durchführung eines oder mehrerer der vorgenannten Verfahrensschritte für sich oder in Kombination erforderlich sein können, wie beispielsweise ein oder mehrere Sensoren der Bewegungserfassungseinrichtung. Insofern wird auf die entsprechenden Angaben zum Verfahren Bezug genommen.

Teil der Bodenfräsmaschine kann eine Speichereinrichtung zum Abspeichern der GNSS-Positionsdatensätze und der Lokal-Positionsdatensätze sein. Bei der Speichereinrichtung kann es sich beispielsweise um ein elektronisches Speichermedium, konkret einen Festplattenspeicher, handeln. In diesem Fall kann die Auswerteeinrichtung derart ausgebildet sein, dass sie in einem Auswertemodus GNSS-Positionsdatensätze und Lokal-Positionsdatensätze, die in der Speichereinrichtung gespeichert sind, aus der Speichereinrichtung abruft und zur Erstellung der angenommenen zurückgelegten Bewegungsbahn heranzieht, insbesondere unter Anwendung eines erfindungsgemäßen Verfahrens. Dazu kann die Auswerteeinrichtung ein oder mehrere geeignete Computerprogramme aufweisen. Der Vorteil der Nutzung einer Speichereinrichtung kann darin bestehen, dass im laufenden Fräsbetrieb eine reine Datenaufzeichnung, insbesondere der GNSS-Positionsdatensätze und der Lokal-Positionsdatensätze, möglich ist und keine laufende Aktualisierung einer angenommenen, bis zu einem bestimmten Moment zurückgelegten Bewegungsbahn erfolgen muss. Ferner erlaubt die Speichereinrichtung die Dokumentation und zumindest vorübergehende Archivierung dieser Daten.

Es kann vorgesehen sein, dass die Bodenfräsmaschine ergänzend zu den bereits beschriebenen Sensoren, beispielsweise der Bewegungserfassungsvorrichtung, ein oder mehrere weitere Sensoren umfasst, über die ein oder mehrere den Fräsbetrieb an sich betreffende Zustands- und/oder Betriebsparameter erfassbar sind. Dies können beispielsweise ein oder mehrere Sensoren zur Erfassung und/oder Ermittlung eines Fräsbetriebs, einer Frästiefe und/oder einer Fräsbreite sein.

Die Bodenfräsmaschine kann eine Anzeigeeinrichtung aufweisen, die zur Anzeige der von der Auswerteeinrichtung aktuell ermittelten angenommenen Bewegungsbahn und/oder einer auf der Grundlage von GNSS-Positionsdatensätzen und/oder Lokal-Positionsdatensätzen ausgebildet ist. Die Auswerteeinrichtung kann derart ausgebildet sein, dass sie einzelne oder mehrere dieser Bewegungsbahnen, insbesondere auch einander überlagert, anzeigt. Es ist auch möglich, dass das Erstellen der angenommenen Bewegungsbahn im laufenden Fräsbetrieb der Bodenfräsmaschine durchgeführt wird und diese beispielsweise dem Bediener, insbesondere fortlaufend aktualisiert, angezeigt wird.

Das vorstehend beschriebene Verfahren sowie die Ausführung einer erfindungsgemäßen Bodenfräsmaschine, insbesondere auch in Form einer oder mehrerer der beschriebenen bevorzugten Weiterbildungen, ermöglichen somit bei vergleichsweise geringem Aufwand eine robuste und vergleichsweise präzise Positionsbestimmung bzw. Positionsverfolgung einer Bodenfräsmaschine im Fräsbetrieb in nahezu Echtzeit. Gleichzeitig können hinsichtlich der Genauigkeit einzelner Positionen der Bodenfräsmaschine im Verlauf einer tatsächlichen Bewegungsbahn qualitativ hochwertigere bzw. präzisere und genauere Positionen und Positionsänderungen ermittelt werden. Hiervon ausgehend können Schlussfolgerungen, die aus der Bewegungsbahn der Bodenfräsmaschine gezogen werden können, wie beispielsweise die Ermittlung eines Fräsvolumens zu Dokumentations- und/oder Abrechnungszwecken oder zur Koordination eines Verladeprozesses von im laufenden Fräsbetrieb entstehendem Fräsgut auf ein oder mehrere Transportfahrzeuge, bei vergleichsweise geringem Zusatzaufwand mit deutlich erhöhter Präzision erfolgen. Dabei kann auf eine Cloud-Anbindung verzichtet werden. Es kann zudem im laufenden Betrieb entschieden werden, ob GNSS-Positionsdatensätze, Lokal-Positionsdatensätze oder Schätz-Positionsdaten aktuell zur Ermittlung einer Bewegungsbahn der Bodenfräsmaschine herangezogen werden bzw. welche Auswahl aus diesen verfügbaren Positionsdaten sinnvoll ist.

Die Erfindung wird nachstehend anhand der in den Figuren gezeigten Ausführungsbeispiele näher erläutert. Es zeigen schematisch:
- Fig. 1: eine Seitenansicht auf eine Bodenfräsmaschine und weitere Elemente;
- Fig. 2: eine Prinzipskizze einer Sensoreinrichtung und einer Auswerteeinrichtung;
- Fig. 3: eine Draufsicht auf eine Bewegungsbahn einer Bodenfräsmaschine;
- Fig. 4: eine Draufsicht auf eine auf GNSS-Positionsdaten beruhenden Bewegungsbahn;
- Fig. 5: eine Draufsicht auf die Bewegungsbahn aus Fig. 4 sowie einer auf Lokal-Positionsdaten beruhenden Bewegungsbahn;
- Fig. 6: eine Ausschnittsvergrößerung eines Abschnitts I aus Fig. 5 mit Ergänzungen;
- Fig.7: eine Ausschnittsvergrößerung eines Abschnitts II aus Fig. 5 mit Ergänzungen;
- Fig. 8: eine Ausschnittsvergrößerung eines Abschnitts III aus Fig. 5 mit Ergänzungen;
- Fig. 9: eine Draufsicht auf eine Verteilung von Schätz-Positionsdaten für die Bewegungsbahnen aus der Fig. 5;
- Fig. 10: eine Draufsicht auf eine auf der Grundlage der Schätz-Positionsdaten angenommenen Bewegungsbahn;
- Fig. 11: ein Ablaufdiagramm eine Verfahrens zum Ermitteln einer angenommenen Bewegungsbahn; und
- Fig. 12: weitere Erläuterungen zu einzelnen Aspekten der vorliegenden Beschreibung.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet.

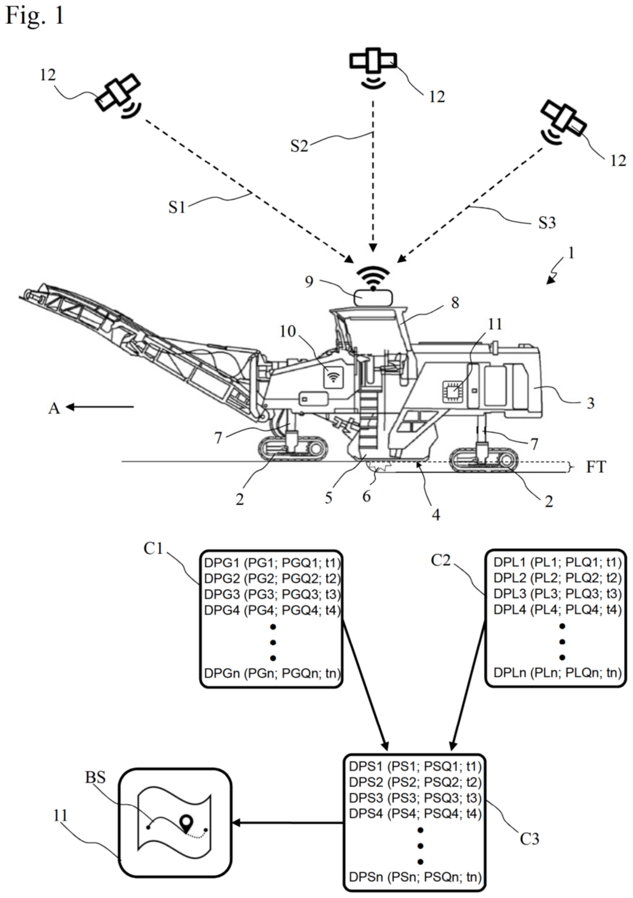

Fig. 1 zeigt eine Seitenansicht auf eine in einem Fräsbetrieb befindliche selbstfahrende Bodenfräsmaschine 1. Elemente der Bodenfräsmaschine 1 können beispielsweise ein von Fahreinrichtungen 2, insbesondere Rädern und/oder Kettenlaufwerken, getragener Maschinenrahmen 3, ein in der Fig. 1 nicht näher dargestellter Antriebsmotor, beispielsweise ein Verbrennungs- und/oder Elektromotor, sowie eine, insbesondere von dem Maschinenrahmen 3 getragene, Fräseinrichtung 4 sein. Die Fräseinrichtung 4 kann einen Fräswalzenkasten 5 und eine von dem Fräswalzenkasten 5 wenigstens teilweise umhauste Fräswalze 6 aufweisen. Bei der Fräswalze 6 kann es sich um beispielsweise ein im Wesentlichen hohlzylinderförmiges Tragrohr handeln, auf dessen Außenmantelfläche eine Vielzahl von Fräswerkzeugen, insbesondere Fräsmeißeln, angeordnet ist. Die Fräseinrichtung 4 kann mit dem Maschinenrahmen 3 verbunden sein. Der Maschinenrahmen 3 kann über Hubeinrichtungen 7, insbesondere beispielsweise Hubsäulen, mit den Fahreinrichtungen 2 verbunden sein. Teil der Fräseinrichtung 4 kann ferner eine, auch mehrere Transportförderbänder umfassende, Transporteinrichtung sein, über die das während des Fräsbetriebes entstehende Fräsgut hin zu einem Abwurfpunkt, beispielsweise zur Verladung auf ein oder mehrere Transportfahrzeuge, transportierbar ist. Bei der Bodenfräsmaschine 1 kann es sich um eine autonom oder semi-autonom fahrende oder manuell durch einen Bediener gesteuerte Bodenfräsmaschine 1 handeln. Es kann ein Fahrstand 8 von der Bodenfräsmaschine 1 umfasst sein, von dem aus die Bedienung der Bodenfräsmaschine 1 durch einen Bediener erfolgen kann.

Weitere Elemente der Bodenfräsmaschine 1 können eine GNSS-Signal-Empfangseinrichtung 9, eine Bewegungserfassungssensoreinrichtung 10 und/oder eine Auswerteeinrichtung 11 sein.

Die GNSS-Signal-Empfangseinrichtung 9 kann zum Empfang von Satellitensignalen S (im Ausführungsbeispiel gemäß Fig. 1 Satellitensignale S1, S2 und S3) von Satelliten 12 eines globalen Navigationssatellitensystems (GNSS) zur Positionsbestimmung einer aktuellen Position der Bodenfräsmaschine 1 ausgebildet sein. Die Anzahl der Satelliten 12, von denen die GNSS-Signal-Empfangseinrichtung 9 gerade Satellitensignale S empfängt, kann, insbesondere auch im laufenden Fräsbetrieb der Bodenfräsmaschine 1, variieren. Je mehr Satellitensignale S die GNSS-Signal-Empfangseinrichtung aktuell empfängt, desto genauer kann zu einem definierten Messzeitpunkt die aktuelle Position P der Bodenfräsmaschine 1 ermittelt werden. Aus den Satellitensignalen S kann die GNSS-Signal-Empfangseinrichtung 9 eine, beispielsweise durch eine Länge- und Breitengradangabe definierte, Position Pn in Form von die jeweilige Position Pn definierenden GNSS-Positionsdaten PGn ermitteln. Abhängig von verschiedenen Betriebs- und Zustandskonstellationen des globalen Navigationssatellitensystems und/oder der GNSS-Signal-Empfangseinrichtung 9, wie beispielsweise der Anzahl der aktuell empfangenen Satellitensignale S, der jeweiligen Signalstärke der empfangenen Satellitensignale S, der aktuellen geometrischen Anordnung der Satelliten 12, von denen Satellitensignale S empfangen werden etc., kann die Qualität, insbesondere die Genauigkeit, der GNSS-Positionsdaten PGn variieren.

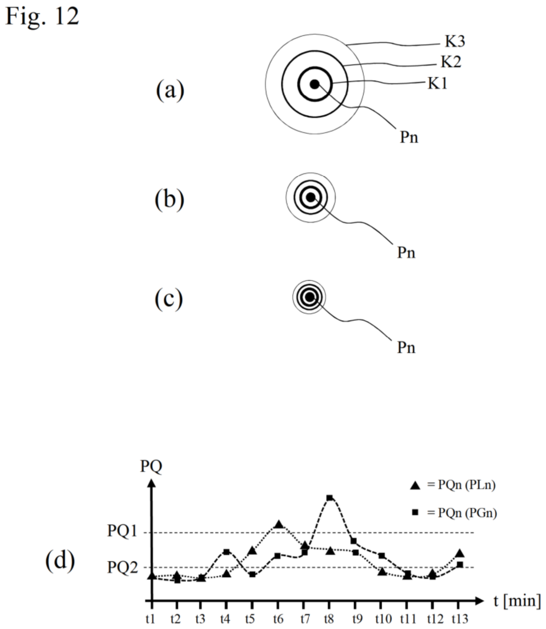

Dies ist exemplarisch in den Figuren 12 (a), (b) und (c) veranschaulicht, die eine Draufsicht auf jeweils eine durch GNSS-Positionsdaten PGn definierte Position Pn, umfassend insbesondere eine Breitengradkoordinate und eine Längengradkoordinate, zeigen. Jede Position Pn ist dabei mit einer Qualitätsinformation PGQn verknüpft, bei der sich beispielsweise um eine Information zur, insbesondere statistischen, Genauigkeit der jeweiligen Position Pn handelt. Dies kann beispielsweise eine Angabe zum CEP der jeweiligen Position sein. Es kann sich beispielsweise um eine Varianz, Standardabweichung, Kovarianzmatrix, Dichte, Verteilungsfunktion oder sonstige Information zur Wahrscheinlichkeitsverteilung oder ähnliches handeln. In Fig. 12 (a) ist dazu eine Position Pn mit einer vergleichsweise niedrigen Genauigkeit, in der Fig. 12 (b) mit einer vergleichsweise mittleren Genauigkeit und in der Fig. 12 (c) mit einer vergleichsweise hohen Genauigkeit gezeigt. Die um den zentrischen Punkt bzw. um die mit höchster Wahrscheinlichkeit angenommene Position Pn verlaufenden Kreise K1, K2 und K3 können dabei beispielsweise Wahrscheinlichkeitsgrenzen markieren, innerhalb derer sich die der jeweiligen Bestimmung der Position P zugrundeliegende tatsächliche Position befindet. Die Beträge dieser Wahrscheinlichkeitsgrenzen nehmen daher mit steigendem Radialabstand zum zentrischen Punkt Pn auch zu. Je geringer der jeweilige Kreisdurchmesser der Kreise K1, K2 und K3 ist, desto höher ist die Qualität der jeweiligen Position Pn bzw. desto genauer ist die mit Pn verknüpfte Positionsangabe.

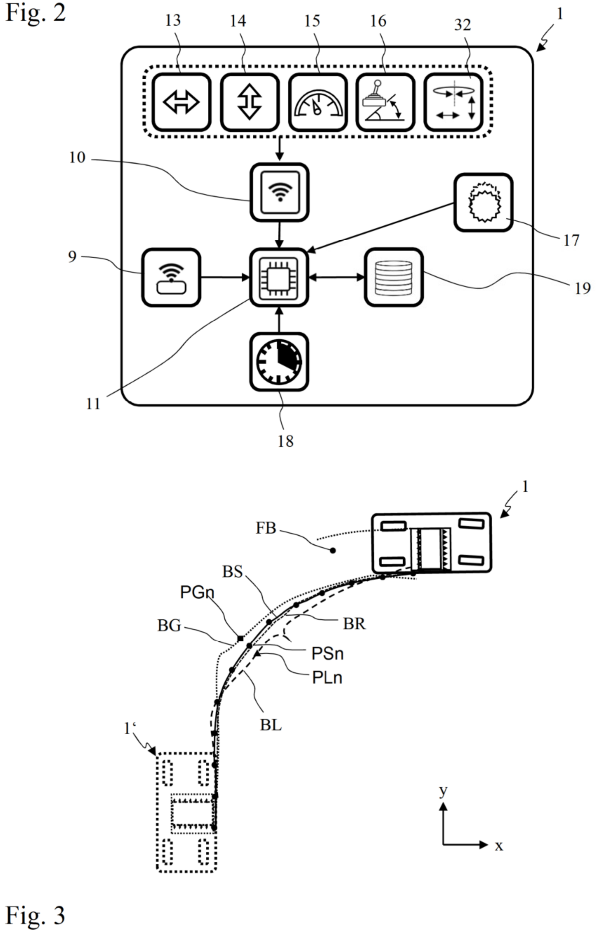

Teil der Bodenfräsmaschine 1 kann ferner die Bewegungserfassungssensoreinrichtung 10 sein. Diese kann dazu vorgesehen und ausgebildet sein, aus Betriebs- und/oder Zustandsparametern der Bodenfräsmaschine 1 bzw. insbesondere deren Veränderung über die Zeit ebenfalls eine Position Pn zu ermitteln, allerdings ohne Bezugnahme auf ein globales Satellitennavigationssystem oder auf ein sonstiges gegenüber der Bodenfräsmaschine 1 externes Referenzsystem. Weitere mögliche Einzelheiten zum Aufbau der Bewegungserfassungssensoreinrichtung 10 sind exemplarisch in der Fig. 2 gezeigt, die schematisch einzelne Komponenten der Bodenfräsmaschine 1 zeigt.

Neben der mit der Auswerteeinrichtung 11 in Signalübertragungsverbindung stehenden GNSS-Signal-Empfangseinrichtung 9 kann auch die Bewegungserfassungssensoreinrichtung 10 mit der Auswerteeinrichtung 11 in Signalübertragungsverbindung stehen. Die Bewegungserfassungssensoreinrichtung 10 kann einen oder mehrere Sensoren umfassen, über die einzelne oder mehrere Zustands- und/oder Betriebsparameter der Bodenfräsmaschine 1, insbesondere Positionen und/oder Positionsänderungen von dem Fahr- und/oder Lenkantrieb und/oder den Fahr- und/oder Lenkeinrichtungen der Bodenfräsmaschine 1 betreffenden Elementen, erfasst und/oder überwacht werden können. Konkret kann die Bewegungssensoreinrichtung 10 dazu beispielsweise einen oder mehrere Lenkwinkelsensoren 13 und/oder Fahrrichtungssensoren 14 und/oder Fahrgeschwindigkeitssensoren 15 und/oder Fahrhebelsensoren 16 umfassen. Weiter ergänzend oder alternativ können auch ein oder mehrere Fahrwegsensoren, beispielsweise Umdrehungs- bzw. Drehzahlsensoren an einer oder mehrerer der Fahreinrichtungen, von der Bewegungssensoreinrichtung 10 umfasst sein, die zur Erfassung der Länge einer zurückgelegten Wegstrecke ausgebildet sind. Es ist ferner ergänzend oder alternativ möglich, dass, insbesondere auch als Teil der Bewegungssensoreinrichtung 10, ein oder mehrere Intertialsensoren 32 (IMU) vorhanden sind, um Bewegungen und/oder Richtungs- und/oder Lageränderungen der Bodenfräsmaschine 1 oder zumindest von Teilen derselben zu erfassen. Ein solcher Intertialsensor 32 kann beispielsweise eine Kombination verschiedener Sensortechnologien in sich vereinen und/oder beispielsweise eine oder mehrere Beschleunigungen und/oder Drehraten und/oder ein (Erd-)Magnetfeld, insbesondere dessen Richtung, und/oder einen Luftdruck etc. ermitteln.

Ergänzend zu dem einen oder den mehreren Sensoren der Bewegungserfassungssensoreinrichtung 10 können ferner ein oder mehrere weitere Sensoren von der Bodenfräsmaschine 1 umfasst sein, die beispielsweise zur Erfassung von einem oder mehreren Fräsparametern, wie beispielsweise eines aktuellen Fräsbetriebes an sich und/oder einer aktuellen Frästiefe und/oder -breite, ausgebildet sind. Der oder diese Sensoren sind in der Fig. 2 exemplarisch als Frässensor 17 bezeichnet.

Fig. 2 zeigt über die genannten Elemente hinaus ferner noch eine Zeiterfassungseinrichtung 18 sowie eine Speichereinrichtung 19.

Bei der Zeiterfassungseinrichtung 18 kann es sich um eine Einrichtung handeln, die eine zeitliche Zuordnung der Erfassung einzelner Positionen und/oder Positionsänderungen, sei es mit der GNSS-Signal-Empfangseinrichtung 9 oder mit der Bewegungserfassungseinrichtung 10, ermöglicht. Es versteht sich, dass die Zeiterfassungseinrichtung 18 nicht als separate Einrichtung ausgebildet sein muss, sondern beispielsweise auch bereits Teil der GNSS-Signal-Empfangseinrichtung 9 oder der Bewegungserfassungseinrichtung 10 sein kann. Wesentlich ist, dass durch sie eine Verknüpfung einzelner oder mehrerer Positionserfassungen und/oder Positionsänderungserfassungen durch die GNSS-Signal-Empfangseinrichtung 9 oder die Bewegungserfassungseinrichtung 10 erfolgen kann bzw. Positionsdaten und/oder Positionsdatensätze mit einem Zeitstempel versehen werden können. Über diesen Zeitstempel können im Laufe einer Bewegungsbahn der Bodenfräsmaschine erstellt Positionen beispielsweise zeitlich einander zugeordnet werden.

Die Speichereinrichtung 19 kann zur zumindest übergangsweisen Speicherung von Daten, insbesondere GNSS-Positionsdaten und von nachstehend noch beschriebenen Lokal-Positionsdaten, ausgebildet sein. Diese können beispielsweise von der Auswerteeinrichtung 11 an die Speichereinrichtung 19 übermittelt werden. Andersherum kann es auch vorgesehen sein, dass die Speichereinrichtung 19 von ihr gespeicherte Daten, insbesondere die vorstehend genannten Positionsdaten, an die Auswerteeinrichtung 11 übermittelt bzw. diese von der Auswerteeinrichtung 11 in der Speichereinrichtung 19 ausgelesen werden können.

Die in der Fig. 2 skizzierten Elemente der Bodenfräsmaschine 1 können über eine oder mehrere Signalübertragungsverbindungen in der beschriebenen Weise miteinander in kabelloser und/oder kabelgebundener Signalübertragungsverbindung stehen. Es kann insbesondere vorgesehen sein, dass sie über ein von der Bodenfräsmaschine 1 umfasstes CAN-Bussystem miteinander kommunizieren.

Aus den Signalen des einen oder der mehreren Sensoren der Bewegungserfassungssensoreinrichtung 10 bzw. den damit beschriebenen Bewegungsinformationen, die insbesondere eine Beschreibung einer relativen Bewegung in Bezug auf einen Ausgangspunkt beschreiben, erstellt die Bewegungserfassungssensoreinrichtung 10 eine Position Pn in Form von die jeweilige Position Pn definierenden Lokal-Positionsdaten PLn. Diese Lokal-Positionsdaten können beispielsweise relative Längen- und Breitengradänderungen umfassen, wenn eine durch Längen- und Breitengradangaben definierte Bezugsposition vorhanden ist, oder allein relative Positionsänderungen auf eine Bezugsposition beschreiben, beispielsweise relativ zu einem Startpunkt der Bodenfräsmaschine für den Fräsbetrieb. Abhängig von den Betriebseigenschaften einzelner oder mehrerer Sensoren, beispielsweise deren jeweiliger Messgenauigkeit und/oder Funktionsintegrität, und/oder verschiedener Betriebs- und Zustandskonstellationen, wie beispielsweise der aktuellen Frästiefe, dem Ausmaß eines vorliegenden Lenkwinkels etc., kann die Qualität, insbesondere die Genauigkeit, der Lokal-Positionsdaten PLn variieren. Es kann somit vorgesehen sein, dass auch jede durch die Bewegungserfassungssensoreinrichtung 10 erfasste Position Pn in einem Lokal-Positionsdatensatz DPLn mit einer Lokal-Positionsdaten-Qualitätsinformation PLQn verknüpft wird, die insbesondere beispielsweise ein Maß für die Genauigkeit der jeweiligen Positionsangabe sein kann, wie beispielsweise eine Varianz, Standardabweichung, Information zur Wahrscheinlichkeitsverteilung oder ähnliches.

Damit können, insbesondere während eines laufenden Fräsbetriebs, mit der Bodenfräsmaschine 1 somit zwei auf zueinander verschiedene Erfassungsmethoden zurückgehende Sammlungen C1 und C2 an Positionen bzw. Bewegungspunkten einer sich entlang einer tatsächlichen Bewegungsbahn bewegten Bodenfräsmaschine 1 erstellt werden und, beispielsweise in der nachstehend noch näher erläuterten Weise, zur Erstellung einer dritten Sammlung C3, beispielsweise umfassend eine oder mehrere Schätz-Positionsdaten PSn, herangezogen werden. Dabei können insbesondere auch die jeweiligen Qualitätsinformationen PGQn der GNSS-Positionsdaten PGn und PLQn der Lokal-Positionsdaten PLn zu definierten Zeitpunkten tn mit berücksichtigt werden. Auf der Grundlage dieser dritten Sammlung C3 kann anschließend eine Ermittlung einer angenommenen Bewegungsbahn BS durch die Auswerteeinrichtung 11 erfolgen, die im Idealfall gegenüber den nur über die GNSS-Positionsdaten PGn und nur über die Lokal-Positionsdaten PLn definierten Bewegungsbahnen BG und BL (in den folgenden Figuren näher veranschaulicht) idealerweise näher an der tatsächlichen Bewegungsbahn BR liegt, auch wenn beispielsweise einzelne Positionen Pn nur mit vergleichsweise schlechter Genauigkeit erfasst werden konnten. Dieser in der Fig. 1 angedeutete mögliche Ablauf ist in den folgenden Figuren in einzelnen Aspekten zur Erläuterungszwecken näher beispielhaft erläutert.

Fig. 3 veranschaulicht hierzu zunächst in einer Draufsicht weitere Einzelheiten. Die Bodenfräsmaschine 1 zeigt eine Position der Bodenfräsmaschine 1 zum Ende bzw. beim Abschluss eines Fräsbetriebs. Mit 1' ist dagegen die Position dieser Bodenfräsmaschine 1 bei Aufnahme des Fräsbetriebs gezeigt. Entsprechend zeigt die Fig. 3 lediglich exemplarisch die Bewegungsbahn der Bodenfräsmaschine 1 teilweise entlang einer Rechtskurve. Die Bodenfräsmaschine 1 kann sich dabei in einem Fräsbetrieb befinden und den von ihr überfahrenen Bodenuntergrund in einer Frästiefe FT und über eine Fräsbreite auffräsen. Dabei kann sie ein Fräsbett FB hinterlassen, das in der Fig. 3 aus Übersichtlichkeitsgründen lediglich für die Endposition mit seinen Seitenrändern angedeutet ist.

Während die Bodenfräsmaschine die in der Fig. 3 veranschaulichte Bewegung durchführt bzw. durchgeführt hat, kann eine Erfassung von GNSS-Positionsdaten PGn und von Lokal-Positionsdaten PLn bzw. eine Erstellung der jeweiligen Positionsdatensätze DPGn und DPLn erfolgt sein. Die GNSS-Positionsdaten PGn bezeichnen Punkte einer Bewegungsbahn BG und die Lokal-Positionsdaten PLn bezeichnen Punkte einer Bewegungsbahn BL. Die unter Berücksichtigung dieser beiden Bewegungsbahnen BG und BL sowie den mit den jeweiligen Positionen Pn verknüpften Qualitätsinformationen PGQn und PLQn, beispielsweise durch wenigstens teilweise Berechnung von Schätz-Positionsdaten PSn, angenommene Bewegungsbahn ist in der Fig. 3 mit BS bezeichnet. Die tatsächliche Bewegungsbahn ist in der Fig. 3 mit BR bezeichnet. Fig. 3 verdeutlicht, dass die Ermittlung der einzelnen Bewegungsbahnen BG, BL und BS, insbesondere jeweils, auf einer Vielzahl von Positionsdatenpunkten beruhen kann. In der Fig. 3 sind dazu exemplarisch Datenpunkte auf der Bewegungsbahn BS angegeben. Es können allerdings von jeder der Bewegungsbahnen BG, BL und/oder BS eine Vielzahl solcher Datenpunkte umfasst sein. Es ist vorteilhaft, wenn jedem dieser Datenpunkte jeweils eine durch Positionsdaten PGn, PLn oder PSn jeweils eine Qualitätsinformation Q sowie insbesondere auch ein Zeitstempel tn (und/oder eine Wegstreckeninformation) zugeordnet ist, wie in der Fig. 1 in den Sammlungen C1, C2 und C3 veranschaulicht. Eine Vielzahl von Positionsdaten PGn, PLn und/oder PSn kann auf diese Weise von der Auswerteeinrichtung 11, insbesondere in eine zeitliche Abfolge, sortiert werden und insbesondere können zeitlich nah beieinander liegende oder gleichzeitig erfasste GNSS-Positionsdaten PGn und Lokal-Positionsdaten PLn gemeinsam zur Erstellung beispielsweise von Schätz-Positionsdaten PSn oder zur Auswahl von entweder den jeweiligen GNSS-Positionsdaten PGn oder der jeweiligen Lokal-Positionsdaten PLn von der Auswerteeinrichtung 11 zur Erstellung der angenommenen Bewegungsbahn BS berücksichtigt werden, um jeweils optimale Positionsdaten mit insgesamt erhöhter Qualität, insbesondere Genauigkeit, für die Ermittlung der angenommenen Bewegungsbahn BS heranziehen zu können. Beispiele, wie dies erfolgen kann, sind in den folgenden Figuren, die jeweils Ausschnitte der in der Fig. 3 gezeigten Fräsfahrt der Bodenfräsmaschine 1 sind, näher erläutert.

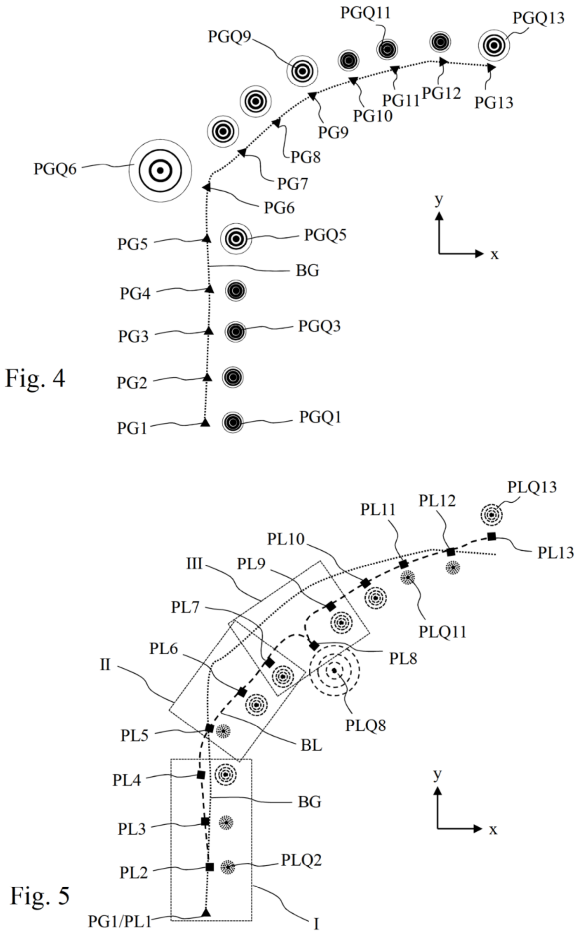

Fig. 4 veranschaulicht zunächst die allein auf der Grundlage der GNSS-Positionsdaten PGn erfassten Bewegungsbahn BG mit den exemplarischen, als Quadrate symbolisierten Positionsdaten PG1 bis PG13, wobei PG1 die Startposition und PG13 die Endposition der Bewegungsbahn BG ist. Jeder einzelnen durch die Positionsdaten PG1 bis PG13 definierten Position ist jeweils eine Qualitätsinformation PGQ1 bis PGQ13 zugeordnet, vorliegend als Streukreise symbolisierte Qualitätsinformationen PGQn (in der Fig. 4 sind aus Übersichtlichkeitsgründen nur einzelne Qualitätsinformationen PGQn zu einigen der Positionen PGn bezeichnet; gezeigt ist allerdings je eine Qualitätsinformation in Zuordnung zu jeder der Positionen PG1 bis PG13). Die mögliche Bedeutung dieser Streukreise wurde anhand der Figuren 12 (a) bis (c) bereits erläutert, worauf an dieser Stelle Bezug genommen wird. Ferner sind in der Fig. 4 die jeweiligen Qualitätsinformationen PGQn ebenfalls aus Übersichtlichkeitsgründen nicht auf den einzelnen Positionen PG1 bis PG13 mit höchster Wahrscheinlichkeit eingezeichnet, sondern jeweils daneben. Je größer der Radius der einzelnen Streukreise ist, desto ungenauer ist die in den jeweiligen Positionsdaten PGn definierte Position und umgekehrt. Der Verlauf der jeweiligen Qualitätsinformation PGQn, insbesondere Genauigkeit, beispielsweise in Form der Varianz, der einzelnen GNSS-Positionsdaten PGn in Abhängigkeit von der Zeit ist in der Fig. 12 (d) zusammengefasst.

Fig. 5 zeigt aufbauend auf der Fig. 4 zusätzlich die Bewegungsbahn BL, die auf der Grundlage der exemplarischen, als Dreiecke symbolisierten Positionsdaten PL1 bis PL13 erstellt wurden, die von der der Bewegungserfassungseinrichtung 10 erfasst wurden. Der Startpunkt PL1 wird hier als der Referenzpunkt herangezogen und kann zu diesem Zwecke beispielsweise identisch mit dem Startpunkt PG1 sein. Auch jeder einzelnen durch Lokal-Positionsdaten PLn definierten Position kann eine Qualitätsinformation PLQn zugeordnet werden, wie in der Fig. 5 ebenfalls aus Übersichtlichkeitsgründen ebenfalls jeweils neben den einzelnen durch die Lokal-Positionsdaten PLn definierten Positionen gezeigt. Auch der Verlauf der jeweiligen Qualitätsinformation PLQn, insbesondere Genauigkeit, beispielsweise in Form der Varianz, der einzelnen Lokal-Positionsdaten PLn ist ebenfalls in der Fig. 12 (d) gezeigt.

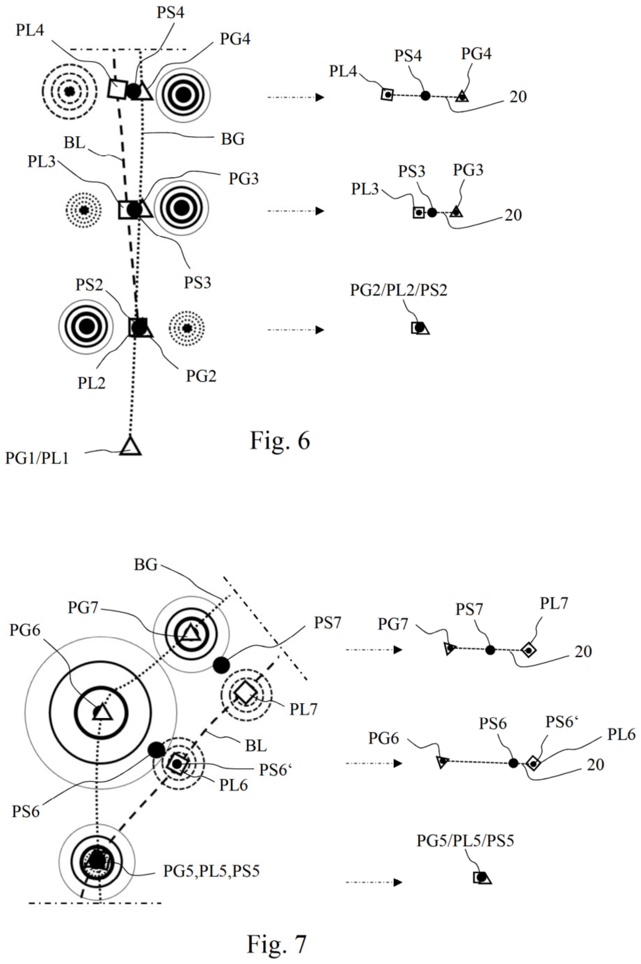

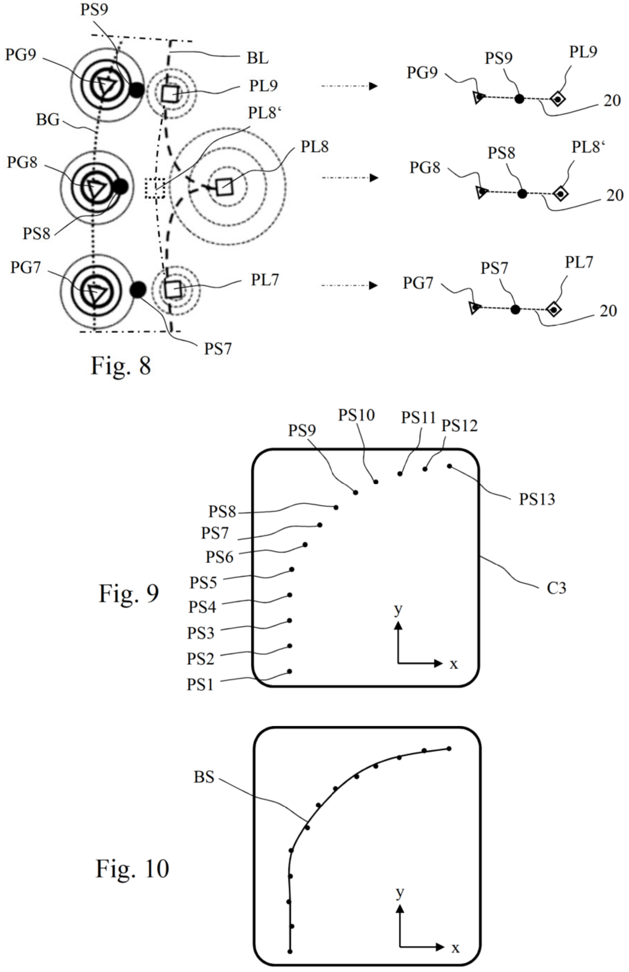

In der Darstellung gemäß der Fig. 12 (d) sind somit Positionsdaten PLn/PGn zu den jeweiligen Zeitpunkten tn ihrer Erfassung mit einer vergleichsweise niedrigen Varianz V hinsichtlich ihrer Qualität bzw. Genauigkeit hochwertiger bzw. besser und präziser gegenüber Positionsdaten PLn/PGn mit einer vergleichsweise hohen Varianz V. Fig. 12 (d) verdeutlicht, dass die Qualität, beispielsweise in Form der Varianz V, der jeweiligen Positionsdaten PLn/PGn über den Verlauf eines Fräsbetriebs, vorliegend beispielsweise im Zeitfenster t1 bis t13, schwanken kann. Dies kann ausgenutzt werden, um die GNSS-Positionsdaten PGn gegenüber den Lokal-Positionsdaten PLn mithilfe der Auswerteeinrichtung 11 gegeneinander abzuwägen und/oder zur Bestimmung von Schätz-Positionsdaten PSn zu nutzen. Dies wird beispielhaft in den Figuren 6, 7 und 8 erläutert, die jeweils Einzelabschnitte der in der Fig. 5 gezeigten Kurvenüberlagerung zeigen. Fig. 6 entspricht dabei dem Abschnitt I in der Fig. 5, Fig. 7 dem Abschnitt II in der Fig. 5 und Fig. 8 dem Abschnitt III in der Fig. 5.

Fig. 6 zeigt die Überlagerung der jeweiligen Positionsdaten PL1/PG1 bis PL4/PG4. PG1 kann nicht nur die älteste durch GNSS-Positionsdaten definierte Position P der jeweiligen Bewegungsbahn bzw. eines Fräsbetriebes sein, sondern auch die Referenzposition, auf die die über die Bewegungserfassungssensoreinrichtung 10 erfassten Zustands- und/oder Betriebsparameter bezogen werden. Ausgehend von dieser Referenzposition kann somit erfasst werden, wie weit sich die Bodenfräsmaschine 1 mit welchem Lenkwinkeleinschlag und/oder in welcher Geschwindigkeit bewegt hat. Es ist möglich, dass diese Referenzposition im Laufe einer Bewegungsbahn der Bodenfräsmaschine 1 aktualisiert wird, beispielsweise dann, wenn eine Position über die GNSS-Signal-Empfangseinrichtung mit vergleichsweise hoher Qualität, insbesondere Genauigkeit/Präzision, ermittelt wird.

Zum zweiten Erfassungszeitpunkt liegen die durch die GNSS-Positionsdaten PG2 und die Lokal-Positionsdaten PL2 definierten Positionen praktisch aufeinander. Insofern müssen an dieser Stelle auch nicht notwendigerweise Schätz-Positionsdaten PS2 von der Auswerteeinrichtung ermittelt werden. Es kann beispielsweise alternativ auch PL2 oder PG2 als zu diesem Zeitpunkt anzunehmende Position herangezogen werden.

Fig. 6 verdeutlicht, dass im vorliegenden Ausführungsbeispiel anschließend die Bewegungsbahnen BG und BL zunehmend auseinanderdriften. Zum Aufnahmezeitpunkt PL3/PG3 weisen die Lokal-Positionsdaten PL3 gegenüber den GNSS-Positionsdaten PG3 eine bessere Qualität, insbesondere höhere Genauigkeit auf, als die GNSS-Positionsdaten PG3. Insofern kann es dann vorteilhaft sein, wenn die Lokal-Positionsdaten PL3 zur Ermittlung von Schätz-Positionsdaten PS3 durch die Auswerteeinrichtung 11 auch stärker gewichtet werden als die GNSS-Positionsdaten PG3, wie beispielsweise durch die Darstellung auf der rechten Seite gezeigt, auf der sich die durch die Schätzpositionsdaten PS3 definierte Position auf einer Verbindungsgeraden 20 zwischen den beiden durch die GNSS-Positionsdaten PG3 und den Lokal-Positionsdaten PL3 näher an der durch die Lokal-Positionsdaten PL3 definierten Position befindet. Beispielsweise kann die Schätzung als gewichtetes Mittel zweier Punkte erfolgen, wobei eine höhere Unsicherheit eines Punkts zu einem geringeren Gewicht beiträgt und umgekehrt.

Die zum Zeitpunkt "4" erfassten Positionsdatensätze weisen dagegen ungefähr die gleiche Qualität auf. In diesem Fall kann die durch die Schätzpositionsdaten PS4 geschätzte Position im Wesentlichen mittig zwischen PL4 und PG4 liegen, insbesondere auf einer Verbindungsgeraden. Bei der Auffindung des Punktes mit der gemeinsam höchsten Wahrscheinlichkeit aus einem GNSS-Positionsdatensatz und einem Lokal-Positionsdatensatz muss es sich nicht notwendigerweise um einen Punkt auf einer Verbindungsgerade zwischen den jeweils höchsten Wahrscheinlichkeiten handeln. Es können auch andere als kreisförmige und/oder zirkuläre normalverteilte Verteilungen vorliegen, beispielsweise linear asymmetrische, elliptische, nichtzirkulär normalverteilte oder andere Verteilungen. In diesen Fällen kann dann der Punkt gemeinsam höchster Wahrscheinlichkeit auch anderswo als auf einer direkten Verbindungsgeraden liegen.

Eine weitere Möglichkeit zur Ermittlung einer Schätzposition bzw. von Schätzpositionsdaten PSn für den Fall, dass die GNSS-Positionsdaten PGn oder die Lokal-Positionsdaten PLn eine vergleichsweise schlechte Qualitätsinformation, insbesondere Genauigkeit, aufweisen, ist in Fig. 7 näher veranschaulicht. Dort nimmt beispielweise vom Messpunkt PG5/PL5/PS5 die Qualität der GNSS-Positionsdaten PG6 sprunghaft ab und verbesserter sich zu PG7 wieder. Die Qualität der Lokal-Positionsdaten PL6 und PL7 ist gegenüber PL5/PG5 dagegen besser bzw. diese beiden Positionsdaten PL6 und PL7 sind gegenüber PL5 insbesondere genauer. Es kann in diesem Fall vorgesehen sein, dass die durch die Schätz-Positionsdaten PS6 geschätzte Position deutlich näher an PL6 angenähert ist oder sogar, wie mit PS6' angezeigt, mit PL6 gleichgesetzt wird. Letzteres kann beispielsweise dann von der Auswerteeinrichtung 11 durchgeführt werden, wenn die Genauigkeit der jeweiligen Positionsdaten PGn/PLn unterhalb eines definierten Schwellenwertes sinkt bzw. beispielsweise die Varianz einen definierten Schwellenwert überschreitet.

Ein solcher Schwellenwert PQ1 ist in der Fig. 12 (d) beispielhaft angegeben. Ferner ist in der Fig. 12 (d) ein ergänzender oder alternativer Schwellenwert PQ2 definiert. Dieser kann beispielsweise dazu dienen, festzulegen, dass, sofern die GNSS-Positionsdaten PGn ausreichend genau sind bzw. eine ausreichende Qualität aufweisen, beispielsweise eine Varianz V aufweisen, die kleiner als der definierte Schwellenwert PQ2 ist, ausschließlich die jeweiligen GNSS-Positionsdaten PGn zum jeweiligen Zeitpunkt tn herangezogen werden und, beispielsweise Lokal-Positionsdaten PLn ergänzend, wie vorstehend erläutert, nur dann berücksichtigt werden, wenn die Qualität der jeweiligen GNSS-Positionsdaten vergleichsweise minderwertig ist.

Eine weitere mögliche Fallkonstellation ist exemplarisch in der Fig. 8 gezeigt, die das Auftreten und eine mögliche Verarbeitung eines Ausreißerwertes durch die Auswerteeinrichtung 11 veranschaulicht. Die GNSS-Positionsdatensätze PG7, PG8 und PG9 weisen eine zueinander vergleichsbare Höhe an Qualität, insbesondere Genauigkeit, auf. Hinsichtlich der Lokal-Positionsdaten erfolgt zwischen PL7 und PL9 zu PL8 dagegen ein vergleichsweise großer Versatz gegenüber den an PL8 angrenzenden Lokal-Positionsdaten PL7 und PL9, sowohl im Verlauf der Bahnkurve BL als auch beispielsweise hinsichtlich der Qualitätsinformation PLQ. Dieser Versatz kann beispielsweise aufgrund einer von der Auswerteeinrichtung 11 durchgeführten Plausibilitätsprüfung, die beispielsweise prüft, ob ein mit einer Bahnkurve BL erfasster Kurvenradius überhaupt möglich wäre oder nicht, durchgeführt werden. Werden dabei ein oder mehrere Positionsdaten als unplausibel von der Auswerteeinrichtung identifiziert, insbesondere gleichzeitig gepaart mit einer minderwertigen Qualitätsinformation, kann die Auswerteeinrichtung 11 diese Positionsdaten vernachlässigen und beispielsweise durch per Interpolation erhaltenen Positionsdaten ersetzen, wie es in der Fig. 8 mit den Positionsdaten PL8' (die PL8 ersetzen) beispielhaft gezeigt ist.

Es können somit von der Auswerteeinrichtung über die gesamte Fräsbahn bzw. Frässtrecke hinweg Schätz-Positionsdaten PSn ermittelt werden, beispielsweise wie vorstehend exemplarisch erläutert, und beispielsweise zeitlich aneinandergereiht werden, wie in der Fig. 9 gezeigt.

Die auf diese Weise erhaltene Vielzahl an Einzelpunkten kann dann zum Erhalt der angenommenen Bewegungsbahn BS auf der Grundlage der Schätz-Positionsdaten PSn genutzt werden, beispielsweise per Interpolation, insbesondere Spline-Interpolation, wie in der Fig. 10 veranschaulicht.

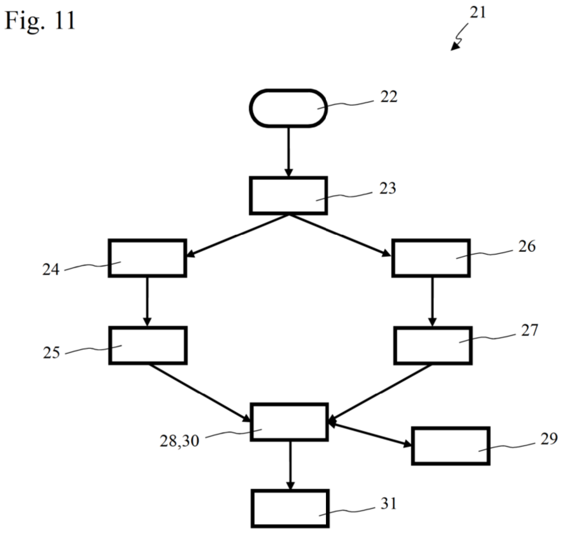

Fig. 11 veranschaulicht mögliche Schritte eines Verfahrens 21 zum Ermitteln einer angenommenen zurückgelegten Bewegungsbahn BS einer Bodenfräsmaschine1, insbesondere unter Bezugnahme auf die vorhergehenden Angaben.

Das Verfahren 21 kann beispielsweise durch ein Aufnehmen 22 eines Fräsbetriebs oder beispielsweise auch manuell gestartet werden. Während des Fräsbetriebs erfolgt ein Durchführen 23 einer Fräsaufgabe entlang einer tatsächlichen Bewegungsbahn. Die Bodenfräsmaschine legt somit eine der tatsächlichen Bewegungsbahn BR entsprechende Wegstrecke im Fräsbetrieb zurück und fräst dabei den Bodenuntergrund, beispielsweise in einer Frästiefe FT, auf .

Mit der Aufnahme des Fräsbetriebs bzw. während des Fräsbetriebs kann ein Erfassen 24 von GNSS-Positionsdaten mithilfe der GNSS-Signal-Empfangseinrichtung 9 und ein Erstellen 25 von GNSS-Positionsdatensätzen DPGn mit den erfassten GNSS-Positionsdaten PGn und wenigstens einer die Qualität bzw. Genauigkeit der in dem jeweiligen GNSS-Positionsdatensatz DPGn enthaltenen GNSS-Positionsdaten PGn charakterisierenden GNSS-Signal-Qualitätsinformation PGQn, beispielsweise ebenfalls durch die GNSS-Signal-Empfangseinrichtung 9, erfolgen.

Es kann, insbesondere parallel zu wenigstens dem Schritt 24, ferner ein Erfassen 26 von Positionsänderungsinformationen der Bodenfräsmaschine 1 mithilfe einer lokalen Bewegungserfassungssensoreinrichtung 10 der Bodenfräsmaschine 1 und ein Erstellen 27 von GNSS-unabhängigen Lokal-Positionsdatensätzen DPLn der Bodenfräsmaschine 1 aus den Positionsänderungsinformationen durchgeführt werden. Jedem dabei erfassten Lokal-Positionsdatensatz DPLn kann neben Lokal-Positionsdaten PLn wenigstens eine die Qualität der in dem jeweiligen Lokal-Positionsdatensatz DPLn enthaltenen Lokal-Positionsdaten PLn charakterisierende Lokal-Positionsdaten-Qualitätsinformation PLQn zugeordnet werden. Das Erfassen 26 kann exklusiv lokal an der Bodenfräsmaschine 1 erfolgen und dazu beispielsweise ein Erfassen von Lenkvorgaben und/oder -bewegungen einer Lenkeinrichtung der Bodenfräsmaschine und/oder ein Erfassen von Fahrbewegungen einer Fahreinrichtung der Bodenfräsmaschine über einen oder mehrere geeignete Sensoren der Bewegungserfassungssensoreinrichtung 10 umfassen. Ideal ist es, wenn die Bewegungserfassungssensoreinrichtung 10 derart ausgebildet ist, dass sie keinerlei Bezugnahme auf ein oder mehrere extern zur Bodenfräsmaschine 1 lokalisierte Referenzen benötigt.

Basierend auf den vorstehend im laufenden Fräsbetrieb erfassten und ermittelten Positionsdatensätzen DPLn und DPGn kann schließlich ein Ermitteln 28 der angenommenen zurückgelegten Bewegungsbahn BS der Bodenfräsmaschine unter Berücksichtigung der GNSS-Positionsdatensätze DPGn und der Lokal-Positionsdatensätze DPLn durch die Auswerteeinrichtung 11 erfolgen. Dieser Schritt kann verschiedene Operationen umfassen. Teil des Schrittes 28 kann beispielsweise ein Gewichten 29 der GNSS-Positionsdaten PGn und der Lokal-Positionsdaten PLn unter Einbeziehung der GNSS-Signal-Qualitätsinformation PGQn und/oder der Lokal-Positionsdaten-Qualitätsinformation PLQn sein, insbesondere beispielsweise wie vorstehend beschrieben. Teil des Schrittes 28 kann insbesondere auch ein Ermitteln 30 von Schätz-Positionsdaten PSn unter Berücksichtigung der GNSS-Positionsdatensätze DPGn und der Lokal-Positionsdatensätze DPLn durch die Auswerteeinrichtung sein, ebenfalls insbesondere wie vorstehend exemplarisch beschrieben. Umfasst das Verfahren ein Ermitteln 30 von Schätz-Positionsdaten PSn unter Berücksichtigung der GNSS-Positionsdatensätze DPGn und der Lokal-Positionsdatensätze DPLn, ist es besonders bevorzugt, wenn das Ermitteln 38 der angenommenen zurückgelegten Bewegungsbahn BS der Bodenfräsmaschine wenigstens teilweise auf der Grundlage dieser Schätz-Positionsdaten PSn erfolgt.

Zum Ermitteln 28 der angenommenen zurückgelegten Bewegungsbahn BS kann es vorgesehen sein, dass hierzu ausschließlich auf Schätzpositionsdaten PSn zurückgegriffen wird. Es können im Schritt 28 allerdings auch Schätzpositionsdaten PSn, GNSS-Positionsdaten PGn und/oder Lokal-Positionsdaten PLn miteinander kombiniert werden. So können beispielsweise ein oder mehrere Ausschlusskriterien definiert werden, bei deren Vorliegen ein oder mehrere GNSS-Positionsdatensätze DPGn und/oder Lokal-Positionsdatensätze DPLn ausschließlich zur Festlegung eines Wegpunktes angenommen und/oder vernachlässigt werden. Insbesondere können einzelne und/oder mehrere der GNSS-Positionsdatensätze DPGn und/oder der Lokal-Positionsdatensätze dann eliminiert werden, wenn die GNSS-Signal-Qualitätsinformation PGQn und/oder die Lokal-Positionsdaten-Qualitätsinformation außerhalb einer definierten Qualitätsschwelle und/oder eines definierten Bereiches liegt. Ergänzend oder alternativ kann es für den Schritt 28 auch vorgesehen sein, dass nur dann Schätz-Positionsdaten PSn zum Ermitteln der angenommenen zurückgelegten Bewegungsbahn BS herangezogen werden, wenn die GNSS-Positionsdaten DPGn und/oder die Lokal-Positionsdaten DPLn außerhalb eines definierten Toleranzbereiches voneinander abweichen. Weiter ergänzend oder alternativ können GNSS-Positionsdaten und/oder Lokal-Positionsdaten dann zur Ermittlung der angenommenen zurückgelegten Bewegungsbahn BS ignoriert werden, wenn sie im Vergleich zu zeitlich vor- und/oder nachgelagerten Positionsdaten außerhalb definierter Maximaldifferenzgrenzen liegen und/oder ihre Qualitätsinformationen außerhalb eines zulässigen Bereiches liegen und/oder Positionsänderungen unplausibel sind.

Es kann insbesondere vorgesehen sein, dass während des Fräsbetriebs zumindest die Schritte 24 und 26 sich regelmäßig wiederholend erfolgen, wobei das Erfassen dabei vorzugsweise zeitabhängig und insbesondere zeitlich zueinander koordiniert erfolgt. Ergänzend oder alternativ kann dies auch wegstreckenabhängig, insbesondere zueinander koordiniert, durchgeführt werden.

Das zeitabhängige und/oder wegstreckenabhängige Erfassen in den Schritten 24 und 26 kann dabei in regelmäßigen Zeit- und/oder Wegstreckenintervallen erfolgen. Es ist allerdings auch möglich, dass die zur Erfassung vorgesehenen Zeit- und/oder Wegstreckenintervalle dynamisch variabel sind bzw. über den Fräsbetrieb hinweg abhängig von einem oder mehreren Betriebs- und/oder Zustandsparametern variiert werden. Sofern die Bodenfräsmaschine 1 sich während des Fräsbetriebs beispielsweise in Geradeausrichtung bewegt, können längere Zeit- und/oder Wegstreckenintervalle ausreichend sein und während einer Kurvenfahrt die Taktung zum Erfassen einzelner Wegpunkte erhöht bzw. die Wegstreckenlänge verkürzt werden, um auf diese Weise für beispielsweise eine Kurvenfahrt die Dichte an pro Zeiteinheit und/oder Wegstreckeneinheit verfügbaren Messpunkten zu erhöhen und letztendlich zu einer mit erhöhter Wahrscheinlichkeit mit der tatsächlichen Bewegungsbahn BR der Bodenfräsmaschine 1 übereinstimmenden angenommenen Bewegungsbahn BS zu gelangen.

Im Extremfall kann es ausgehend von der Erfassung initialer GNSS-Positionsdaten bei einer Aufnahme eines Fräsbetriebs vorgesehen sein, dass erst bei einem ersten Abweichen von der Geradeausfahrt überhaupt Lokal-Positionsdaten DPLn im Schritt 27 erstellt und im Schritt 28 berücksichtigt werden. Insbesondere auch, um dieses Bewegungsverhalten der Bodenfräsmaschine 1 Überwachen und Erkennen zu können, ist es möglich, dass ein Erfassen von Lenkvorgaben und/oder -bewegungen einer Lenkeinrichtung der Bodenfräsmaschine und/oder ein Erfassen von Fahrbewegungen einer Fahreinrichtung der Bodenfräsmaschine erfolgt und von der Auswerteeinrichtung 11 entsprechend berücksichtigt wird. Entsprechend kann es daher auch vorgesehen sein, dass das Ermitteln 28 unter Berücksichtigung von Lokal-Positionsdaten PLn erst dann erfolgt, wenn eine Änderung einer Fahrrichtung der Bodenfräsmaschine und/oder keine Geradeausfahrt mehr erfolgt und/oder eine Fahrbewegung der Bodenfräsmaschine gestoppt wird.

Das Ermitteln 28 der angenommenen zurückgelegten Bewegungsbahn kann beispielsweise mit Hilfe einer Spline-Interpolation unter Berücksichtigung der GNSS-Positionsdaten, der Lokal-Positionsdaten und/oder Schätz-Positionsdaten als Stützstellen erfolgen.

Die im Schritt 28 ermittelte angenommene zurückgelegte Bewegungsbahn BS der Bodenfräsmaschine 1 kann anschließend in einem Schritt 31 beispielsweise angezeigt und/oder zum Berechnen einer erbrachten Fräsleistung herangezogen werden.

### Bezugszeichenliste

- 1: Bodenfräsmaschine
- 2: Fahreinrichtung
- 3: Maschinenrahmen
- 4: Fräseinrichtung
- 5: Fräswalzenkasten
- 6: Fräswalze
- 7: Hubeinrichtung
- 8: Fahrstand
- 9: GNSS-Signal-Empfangseinrichtung
- 10: Bewegungserfassungssensoreinrichtung
- 11: Auswerteeinrichtung
- 12: Satellit
- 13: Lenkwinkelsensor
- 14: Fahrrichtungssensor
- 15: Fahrgeschwindigkeitssensor
- 16: Fahrhebelsensor
- 17: Frässensor
- 18: Zeiterfassungseinrichtung
- 19: Speichereinrichtung
- 20: Verbindungsgerade
- 21: Verfahren zum Ermitteln
- 22: Aufnehmen eines Fräsbetriebs
- 23: Durchführen
- 24: Erfassen von GNSS-Positionsdaten
- 25: Erstellen vom GNSS-Positionsdatensätzen
- 26: Erfassen von Lokal-Positionsdaten
- 27: Erstellen von Lokal-Positionsdatensätzen
- 28: Ermitteln einer angenommenen zurückgelegten Bewegungsbahn
- 29: Gewichten
- 30: Ermitteln von Schätzpositionsdaten
- 31: Berechnen einer Fräsleistung
- 32: Intertialsensor
- S: Satellitensignal
- A: Vorwärts- bzw. Fräsrichtung
- Pn: Position
- PGn: GNSS-Positionsdaten
- PGQn: GNSS-Signal-Qualitätsinformation
- DPGn: GNSS-Positionsdatensatz
- PLn: Lokal-Positionsdaten
- PLQn: Lokal-Positionsdaten-Qualitätsinformation
- DPLn: Lokal-Positionsdatensatz
- BS: angenommene Bewegungsbahn
- BG: über GNSS-Positionsdaten definierten Bewegungsbahn
- BL: über Lokal-Positionsdaten definierten Bewegungsbahn
- C1: Sammlung GNSS
- C2: Sammlung Lokal
- C3: Sammlung Schätz
- PSn: Schätz-Positionsdaten
- FB: Fräsbett
- BG: Bewegungsbahn aus GNSS-Positionsdaten
- BL: Bewegungsbahn aus Lokal-Positionsdaten
- BS: angenommene Bewegungsbahn
- BR: tatsächliche Bewegungsbahn
- tn: Zeitstempel
- V: Varianz
- t: Zeit
- Ft: Frästiefe

## Patentansprüche

1. Verfahren (21) zum Ermitteln einer angenommenen zurückgelegten Bewegungsbahn (BS) einer Bodenfräsmaschine (1), umfassend die Schritte:
a) Durchführen(23) einer Fräsaufgabe entlang einer tatsächlichen Bewegungsbahn (BR),
b) Erfassen (24) von GNSS-Positionsdaten (PGn) mithilfe einer GNSS-Signal-Empfangseinrichtung (9) und Erstellen (25) von GNSS-Positionsdatensätzen (DPGn) mit den erfassten GNSS-Positionsdaten (PGn) und wenigstens einer die Genauigkeit der in dem jeweiligen GNSS-Positionsdatensatz (DPGn) enthaltenen GNSS-Positionsdaten (PGn) charakterisierenden GNSS-Signal-Qualitätsinformation (PGQn);
c) Erfassen (26) von Positionsänderungsinformationen der Bodenfräsmaschine (1) mithilfe einer lokalen Bewegungserfassungssensoreinrichtung (10) der Bodenfräsmaschine (1) und Erstellen von GNSS-unabhängigen Lokal-Positionsdatensätzen (DPLn) der Bodenfräsmaschine (1) aus den Positionsänderungsinformationen, wobei jeder Lokal-Positionsdatensatz (DPLn) neben Lokal-Positionsdaten (PLn) wenigstens eine die Qualität der in dem jeweiligen Lokal-Positionsdatensatz (DPLn) enthaltenen Lokal-Positionsdaten (PLn) charakterisierende Lokal-Positionsdaten-Qualitätsinformation (PLQn) umfasst;
d) Ermitteln (28) der angenommenen zurückgelegten Bewegungsbahn (BS) der Bodenfräsmaschine (1) unter Berücksichtigung der GNSS-Positionsdatensätze (DPGn) und der Lokal-Positionsdatensätze (DPLn) durch eine Auswerteeinrichtung (11),
wobei GNSS-Positionsdaten (PGn) und/oder Lokal-Positionsdaten (PLn) dann zur Ermittlung der angenommenen zurückgelegten Bewegungsbahn (BS) ignoriert werden, wenn sie
- im Vergleich zu zeitlich vor- und/oder nachgelagerten Positionsdaten (PLn, PGn) außerhalb definierter Maximaldifferenzgrenzen liegen und/oder
- ihre Qualitätsinformationen (PGQn, PLQn) außerhalb eines zulässigen Bereiches liegen.

2. Verfahren (21) gemäß Anspruch 1,
**dadurch gekennzeichnet,**
**dass** das Erfassen (24, 26) in den Schritten b) und c), insbesondere zueinander koordiniert, zeitabhängig erfolgt.

3. Verfahren (21) gemäß einem der vorhergehenden Ansprüche,
**dadurch gekennzeichnet,**
**dass** das zeitabhängige Erfassen (24, 26) in den Schritten b) und c) dynamisch variabel erfolgt.

4. Verfahren (21) gemäß einem der vorhergehenden Ansprüche,
**dadurch gekennzeichnet,**
**dass** das Erfassen (26) im Schritt c) wenigstens ein
- Erfassen von Lenkvorgaben und/oder -bewegungen einer Lenkeinrichtung der Bodenfräsmaschine (1),
- ein Erfassen von Fahrbewegungen einer Fahreinrichtung (2) der Bodenfräsmaschine (1),
- ein Erfassen von Fahrbewegungen anhand von Intertialsensoren (32),
- ein Erfassen von Fahrbewegungen anhand von Kamerabilden,
umfasst.

5. Verfahren (21) gemäß einem der vorhergehenden Ansprüche,
**dadurch gekennzeichnet,**
**dass** im Schritt d) ein Gewichten (29) der GNSS-Positionsdaten (PGn) und der Lokal-Positionsdaten (PLn) unter Einbeziehung der GNSS-Signal-Qualitätsinformation (PGQn) und/oder der Lokal-Positionsdaten-Qualitätsinformation (PLQn) erfolgt.

6. Verfahren (21) gemäß einem der vorhergehenden Ansprüche,
**dadurch gekennzeichnet,**
**dass** im Schritt d) ein Ermitteln (30) von Schätz-Positionsdaten (PSn) unter Berücksichtigung der GNSS-Positionsdatensätze (DPGn) und der Lokal-Positionsdatensätze (DPLn) durch die Auswerteeinrichtung (11) erfolgt, und dass das Ermitteln (28) der angenommenen zurückgelegten Bewegungsbahn (BS) der Bodenfräsmaschine (1) wenigstens teilweise auf der Grundlage der Schätz-Positionsdaten (PSn) erfolgt.

7. Verfahren (21) gemäß einem der vorhergehenden Ansprüche,
**dadurch gekennzeichnet,**
**dass** nur dann Schätz-Positionsdaten (PSn) ermittelt und/oder zur weiteren Auswertung durch die Auswerteeinrichtung (11) herangezogen werden, wenn die GNSS-Signal-Qualitätsinformation (PGQn) außerhalb einer definierten Qualitätsschwelle liegt.

8. Verfahren (21) gemäß einem der vorhergehenden Ansprüche,
**dadurch gekennzeichnet,**
**dass** nur dann Schätz-Positionsdaten (PSn) zum Ermitteln (28) der angenommenen zurückgelegten Bewegungsbahn (BS) herangezogen werden, wenn die GNSS-Positionsdaten (PGn) und die Lokal-Positionsdaten (PLn) außerhalb eines definierten Toleranzbereiches voneinander abweichen.

9. Verfahren (21) gemäß einem der vorhergehenden Ansprüche,
**dadurch gekennzeichnet,**
**dass** der Schritt d) dadurch initialisiert wird, dass
- eine Änderung einer Fahrrichtung der Bodenfräsmaschine (1) erfolgt und/oder
- keine Geradeausfahrt mehr erfolgt und/oder
- eine Fahrbewegung der Bodenfräsmaschine (1) gestoppt wird und/oder
- ein definiertes Zeit- und/oder Wegintervall abgelaufen ist und/oder
- die GNSS-Signal-Qualitätsinformation (PGQn) einen definierten Schwellenwert über- oder unterschreitet und/oder einen definierten Bereich verlässt.

10. Verfahren (21) gemäß einem der vorhergehenden Ansprüche,
**dadurch gekennzeichnet,**
**dass** zum Erstellen eines Lokal-Positionsdatensatz (DPLn) auf wenigstens einen zeitlich unmittelbar vorgelagerten Schätz-Positionsdatensatz (PSn) oder GNSS-Positionsdatensatz (DPGn) zurückgegriffen wird.

11. Verfahren (21) gemäß einem der vorhergehenden Ansprüche,
**dadurch gekennzeichnet,**
**dass** das Erstellen (28) der angenommenen zurückgelegten Bewegungsbahn (BS) mit Hilfe einer Spline-Interpolation unter Berücksichtigung der GNSS-Positionsdaten (PGn), der Lokal-Positionsdaten (PLn) und/oder Schätz-Positionsdaten (PSn) als Stützstellen erfolgt.

12. Bodenfräsmaschine (1), umfassend eine GNSS-Signalempfangseinrichtung (9) und eine lokale Bewegungserfassungssensoreinrichtung (10),
**dadurch gekennzeichnet,**
**dass** sie eine Auswerteeinrichtung (11) zur Durchführung des Verfahrens (21) gemäß einem der Ansprüche 1 bis 11 aufweist.

13. Bodenfräsmaschine (1) gemäß Anspruch 12,
**dadurch gekennzeichnet,**
**dass** sie eine Speichereinrichtung (19) zum Abspeichern der GNSS-Positionsdatensätze (DPGn) und der Lokal-Positionsdatensätze (DPLn) umfasst, und dass die Auswerteeinrichtung (11) derart ausgebildet ist, dass sie in einem Auswertemodus GNSS-Positionsdatensätze (DPGn) und Lokal-Positionsdatensätze (DPLn), die in der Speichereinrichtung (19) gespeichert sind, aus der Speichereinrichtung (19) abruft und zur Erstellung der angenommenen zurückgelegten Bewegungsbahn (BS) heranzieht.
